# FASCICULE DE BREVET EUROPEEN

(11) **EP 2 516 054 B1**
(45) Date de publication et mention de la délivrance du brevet: **08.01.2014**
(21) Numéro de dépôt: 10803086.7
(22) Date de dépôt: 22.12.2010
(51) Int. Cl.: B01J 13/18

(54) **PROCEDE D'ELABORATION DE BALLONS POLYMERIQUES COMPRENANT DES ELEMENTS METALLIQUES**
VERFAHREN ZUR HERSTELLUNG VON POLYMERKUGELN MIT METALLELEMENTEN
PROCESS FOR PRODUCING POLYMERIC BALLS COMPRISING METALLIC ELEMENTS

(30) Priorité: 22.12.2009 FR 0959383
(43) Date de publication de la demande: 31.10.2012
(73) Titulaire: Commissariat à l'Énergie Atomique et aux Énergies Alternatives, 75015 Paris (FR)
(72) Inventeur: BALLAND LONGEAU, Alexia, F-37000 Tours (FR); MOREAU, Louis, 37120 LA TOUR SAINT-GELIN (FR); LEVASSORT, Christian, F-37000 Tours (FR); GUILLOT, Lyonel, F-21240 Talant (FR)
(74) Mandataire: Ilgart, Jean-Christophe
(86) Numéro de dépôt international: PCT/EP2010/070516
(87) Numéro de publication internationale: WO 2011/076858

(56) Documents cités:
- WO-A2-2004/007767
- DE-A1- 4 339 635
- FR-A1- 2 921 929
- US-A- 4 123 396
- US-A- 4 197 220
- BAYRAMOGLU G ET AL: "Immobilization of urease via adsorption onto l-histidine-Ni(II) complexed poly(HEMA-MAH) microspheres: Preparation and characterization", PROCESS BIOCHEMISTRY, ELSEVIER, NL LNKD- DOI:10.1016/J.PROCBIO.2005.03.058, vol. 40, no. 11, 1 novembre 2005 (2005-11-01), pages 3505-3513, XP025306692, ISSN: 1359-5113 [extrait le 2005-11-01]
- UGUZDOGAN E ET AL: "The use of polyethyleneglycolmethacrylate-co-vinylimi dazole (PEGMA-co-VI) microspheres for the removal of nickel(II) and chromium(VI) ions", JOURNAL OF HAZARDOUS MATERIALS, ELSEVIER, AMSTERDAM, NL LNKD- DOI:10.1016/J.JHAZMAT.2009.12.004, vol. 177, no. 1-3, 4 décembre 2009 (2009-12-04), pages 119-125, XP026928933, ISSN: 0304-3894 [extrait le 2009-12-04]
- UGUZDOGAN E ET AL: "Preparation and characterization of polyethyleneglycolmethacrylate (PEGMA)-co-vinylimidazole (VI) microspheres to use in heavy metal removal", JOURNAL OF HAZARDOUS MATERIALS, ELSEVIER, AMSTERDAM, NL LNKD- DOI:10.1016/J.JHAZMAT.2008.05.145, vol. 162, no. 2-3, 15 mars 2009 (2009-03-15), pages 1073-1080, XP025805101, ISSN: 0304-3894 [extrait le 2008-06-05]
- IEMMA ET AL: "Removal of metal ions from aqueous solution by chelating polymeric microspheres bearing phytic acid derivatives", EUROPEAN POLYMER JOURNAL, PERGAMON PRESS LTD. OXFORD, GB, vol. 44, no. 4, 20 janvier 2008 (2008-01-20), pages 1183-1190, XP022561569, ISSN: 0014-3057
- MOREAU L ET AL: "Recent advances in development of materials for laser target", LASER AND PARTICLE BEAMS, CAMBRIDGE UNIVERSITY PRESS, CAMBRIDGE, GB LNKD- DOI:10.1017/S0263034609000317, vol. 27, no. 4, 1 janvier 2009 (2009-01-01), pages 537-544, XP008127624, ISSN: 0263-0346

## Description

### DOMAINE TECHNIQUE

La présente invention a trait à un procédé d'élaboration de ballons polymériques dopés éventuellement poreux par des éléments métalliques, lesquels éléments métalliques sont fixés au matériau constitutif desdits ballons par des liaisons dites de coordination, appelées également liaisons datives, ou par des liaisons ioniques.

On précise que l'on entend, dans ce qui précède et ce qui suit, par ballon une sphère ou un objet sensiblement sphérique présentant une cavité interne délimitée par une paroi polymérique conférant la forme à ladite sphère ou ledit objet.

On précise que l'on entend, dans ce qui précède et ce qui suit, par bille une sphère pleine ou un objet sensiblement sphérique plein.

Le procédé de l'invention permet en particulier de fabriquer des ballons, en particulier des microballons (à savoir, des ballons présentant un diamètre (le diamètre externe pour les ballons) de quelques centaines de micromètres à plusieurs millimètres présentant une paroi poreuse et dont le matériau constitutif comprend des éléments métalliques liés par des liaisons de coordination ou ioniques à des groupes de ce matériau présentant des caractéristiques géométriques contrôlées.

Les ballons obtenus trouvent leur application dans la réalisation de cibles ou d'éléments de cibles pour les études d'interactions laser/plasma, de la physique des plasmas et plus généralement pour l'étude de la fusion thermonucléaire par confinement inertiel.

### ÉTAT DE LA TECHNIQUE ANTÉRIEURE

Les ballons polymériques dopés ou billes polymériques dopées par des éléments métalliques peuvent être réalisé(e)s et ce jusqu'à présent selon deux grandes voies de synthèse.

Selon une première voie, des ballons ou billes polymériques préalablement synthétisé(e)s sont plongé(e)s dans une solution comprenant l'élémént métallique, ledit élément métallique diffusant, par imprégnation physique, à travers la paroi du ballon pour aller occuper la cavité centrale du microballon ou à travers la paroi de la bille pour aller occuper la porosité de celle-ci. A l'issue de cette imprégnation physique, l'on se retrouve ainsi avec des ballons présentant un excès d'élément métallique dans la cavité centrale par rapport à la quantité d'élément métallique présent dans la paroi ou un excès d'élément métallique dans certaines zones des billes et avec une impossibilité à contrôler la quantité de cet élément métallique à l'intérieur de ladite paroi ou desdites billes.

Pour éliminer l'excès d'élément métallique dans la cavité centrale des ballons, une solution consiste à faire subir aux ballons ainsi dopés une étape de lavage par un solvant apte à s'échanger avec celui présent dans la cavité centrale et à ainsi évacuer, de façon concomitante, l'élément métallique présent dans ladite cavité. Toutefois, cette étape de lavage n'est pas discriminante et va également éliminer une grande partie voire la totalité de l'élément métallique présent à l'intérieur de la paroi des ballons.

Les mêmes problèmes se posent, en ce qui concerne les billes lorsqu'il s'agit d'évacuer l'excès d'élément métallique dans certaines zones poreuses des billes.

Il s'ensuit donc qu'il est très difficile de procéder au dopage par des éléments métalliques de ballons ou billes préalablement synthétisé(e)s et à un contrôle du taux de dopage de ces derniers ou dernières.

BAYRAMOGLU G. et al., "Immobilization of urease via adsorption onto I-histidine-Ni(II) complexed poly(HEMA-MAH) microspheres: Preparation and characterization", PROCESS BIOCHEMISTRY, vol. 40, no. 11, pages 3505-3513 décrit un procédé d'élaboration de microsphères poly(HEMA-MAH) dopées par Ni comprenant les étapes suivantes: a) une étape de formation de microsphères poly(HEMA-MAH) par polymérisation dans toluène comprenant AIBN, MAH et HEMA; b) une étape de mise en contact desdits microsphères poly(HEMA-MAH) avec une solution comprenant Ni. Ce document décrit aussi que l'étape a) de ce procédé est mise en oeuvre par la succession d'opérations suivantes: 1) la formation de gouttes liquides avec une phase toluène; 2) mise en émulsion dans une phase aqueuse des gouttes ainsi formées et 3) la polymérisation des monomères MAH et HEMA, moyennant quoi l'on obtient des microsphères poly(HEMA-MAH).

Pour pallier les inconvénients susmentionnés, certains auteurs ont exploré une deuxième voie de synthèse, en ce qui concerne la fabrication de ballons, laquelle consiste en un procédé comprenant les étapes suivantes :
- une étape d'usinage de demi-coquilles dans un bloc de mousse, les demi-coquilles étant aptes, d'un point de vue géométrique, à être réunies par collage pour former un ballon ;
- une étape d'imprégnation des demi-coquilles par une solution comprenant un sel métallique ;
- une étape de séchage des demi-coquilles ainsi imprégnées, moyennant quoi il s'ensuit un dépôt de sel métallique dans le polymère constitutif des demi-coquilles ;
- une étape de collage des demi-coquilles pour former un ballon.

Toutefois, cette voie de synthèse s'avère complexe à mettre en oeuvre et permet d'obtenir difficilement des ballons présentant une bonne sphéricité.

Il ressort ainsi des voies de synthèse de ballons dopés ou billes dopées par des éléments métalliques de l'art antérieur l'un ou plusieurs des inconvénients suivants :
*pour la première méthode explicitée ci-dessus :
   - une incapacité à contrôler le taux de dopage par des éléments métalliques dans les parois constitutives des ballons ou billes;
   - une accumulation d'éléments métalliques dans la cavité centrale des ballons ou dans la porosité des billes, dont la seule voie d'élimination est le lavage qui s'accompagne inévitablement d'une élimination de l'élément métallique des parois constitutives des ballons ou des billes ; et
*pour la deuxième méthode explicitée ci-dessus :
   *une réalisation très complexe lorsqu'il s'agit de fabriquer des ballons par usinage de demi-coquilles et assemblage de ces dernières.

Les inventeurs se sont ainsi fixé pour objectif de proposer un procédé d'élaboration de ballons polymériques dopés ne présentant pas les inconvénients susmentionnés.

### EXPOSÉ DE L'INVENTION

Ainsi, l'invention a trait, selon un premier objet, à un procédé d'élaboration de ballons polymériques dopés par au moins un élément métallique comprenant les étapes suivantes :
a) une étape de formation de ballons polymériques par polymérisation, dans une phase organique comprenant un initiateur de polymérisation, d'au moins un monomère éthylénique comprenant au moins un ligand chélateur d'au moins un élément métallique ;
b) une étape de mise en contact desdits ballons polymériques avec une solution comprenant au moins un élément métallique.

Avant d'entrer plus en détail dans la description de cette invention, nous précisons les définitions suivantes.

Par monomère éthylénique comprenant au moins un ligand chélateur d'au moins un élément métallique, on entend, classiquement, un monomère porteur d'une double liaison carbone-carbone comprenant au moins un groupe pendant apte à complexer au moins un élément métallique, ce qui signifie, en d'autres termes, que l'élément métallique est apte à se lier audit groupe pendant par une liaison de coordination par partage d'un doublet libre ou par une liaison ionique par partage d'une charge négative portée par ledit groupe pendant avec l'élément métallique à fixer.

Par élément métallique, on entend, classiquement, un élément appartenant à la catégorie des éléments alcalins, des éléments alcalino-terreux, des éléments de transition, des éléments lanthanides, des éléments actinides ou des éléments choisis parmi Al, Ga, Ge, In, Sn, Sb, Tl, Pb, Bi et Po.

De ce procédé innovant d'élaboration de ballons polymériques dopés par des éléments métalliques découlent les avantages suivants :
- il permet l'incorporation, dans les parois des ballons, d'une large diversité d'éléments métalliques, du fait que la liaison entre les éléments métalliques et le matériau polymérique constitutif des parois des ballons s'effectue par simple liaison de coordination ou liaison ionique grâce au choix du monomère susmentionné ;
- il permet l'introduction d'un taux déterminé d'élément métallique, ledit taux pouvant être réglé en jouant sur la quantité de monomères susmentionnés mis en jeu lors de l'étape de polymérisation ;
- il permet une localisation spécifique des éléments métalliques dans la paroi des ballons, par une répartition de ces éléments de façon homogène ou par zone en jouant sur la répartition du métal (par exemple, en jouant sur le temps de contact ou la profondeur de plongée dans la solution métallique);
- il permet une localisation exclusive des éléments métalliques dans la paroi des ballons et non la cavité centrale par la localisation des monomères susmentionnés, la cavité centrale des ballons pouvant être débarrassée(s) des éléments métalliques éventuellement présents par des opérations de lavage qui n'affecteront pas la quantité d'éléments métalliques dans les parois des ballons du fait que ceux-ci sont fixés de façon stable par des liaisons de coordination et/ou ioniques grâce aux monomères susmentionnés ;
- il est facilement reproductible, notamment en ce qui concerne le taux d'éléments métalliques présent dans les parois des ballons du fait que ce taux est lié exclusivement à la quantité de monomères spécifiques polymérisés pour entrer dans la constitution des parois des ballons.

Comme mentionné ci-dessus, le procédé de l'invention comprend, en premier lieu, une étape de formation de ballons polymériques par polymérisation, dans une phase organique comprenant au moins un initiateur de polymérisation, d'au moins un monomère éthylénique comprenant au moins un ligand chélateur d'au moins un élément métallique.

Selon l'invention, les monomères comportant des groupes susceptibles de constituer des ligands chélateurs sont, avantageusement, des monomères comportant au moins un groupe porteur d'un doublet libre, en particulier un groupe amine, et/ou au moins un groupe chargé négativement, en particulier un groupe carboxylate. Des monomères avantageux peuvent comprendre à la fois au moins un groupe amine et au moins un groupe carboxylate, ces deux types de groupes pouvant provenir d'un reste d'acide aminé, l'avantage de tels monomères étant de permettre de fixer la quasi-totalité des éléments métalliques du tableau périodique.

Plus précisément, des monomères susceptibles d'être utilisés dans le procédé de l'invention peuvent répondre à la formule (I) suivante : 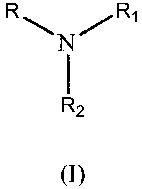 dans laquelle :
- R représente un groupe choisi parmi les groupes de formules suivantes : 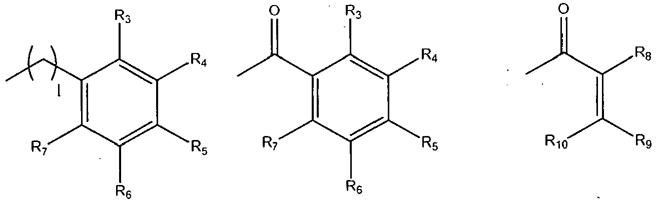
- R₁ et R₂ représentent, indépendamment, H, un groupe alkyle, un groupe aryle ou un groupe de formules suivantes : 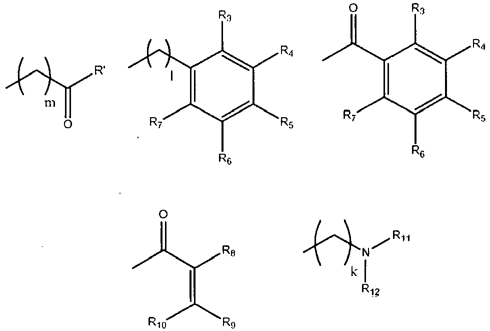 R₁₁ et R₁₂ correspondant, indépendamment, à des groupes répondant à la même définition que R₁ et R₂ donnée ci-dessus ;
- R' est un groupe OR₁₃ ou amine;
- R₃, R₄, R₅, R₆, R₇, représentent, indépendamment, H, un groupe éthylénique, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés, un ou plusieurs atomes d'oxygène, d'azote, de soufre et/ou de sélénium pouvant s'intercaler dans lesdits groupes, à condition que l'un au moins des R₃, R₄, R₅, R₆, R₇ représente un groupe éthylénique;
- R₈, R₉ et R₁₀ représentent, indépendamment, H, un groupe éthylénique, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés, un ou plusieurs atomes d'oxygène, d'azote, de soufre et/ou de sélénium pouvant s'intercaler dans lesdits groupes ;
- R₁₃ représente H, un métal, tel qu'un métal alcalin, un groupe alkyle, un groupe aryle, un groupe acyle ou un groupe alkylaryle, lesdits groupes alkyle, aryle, alkylaryle étant éventuellement perfluorés et un ou plusieurs atomes d'oxygène, de soufre et/ou de sélénium pouvant s'intercaler dans lesdits groupes ;
- k, l et m sont des entiers allant de 0 à 20 ;
et les sels de ceux-ci.

Avant d'entrer plus en détail dans la description des monomères susmentionnés, nous proposons les définitions suivantes.

Par groupe alkyle, on entend, généralement, dans ce qui précède et ce qui suit, un groupe alkyle linéaire ou ramifié comprenant de 1 à 20 atomes de carbone ou cyclique comprenant de 3 à 20 atomes de carbone. On peut citer, à titre d'exemples, le groupe méthyle, éthyle, n-propyle, i-propyle, n-butyle, n-dodécanyle, i-butyle, t-butyle, cyclopropyle, cyclohexyle.

Par groupe aryle, on entend, généralement, dans ce qui précède et ce qui suit, un groupe aryle comprenant de 6 à 20 atomes de carbone. On peut citer, à titre d'exemples, le groupe benzyle, naphtyle, biphényle.

Par groupe alkylaryle, on entend, généralement, dans ce qui précède et ce qui suit, un groupe aryle de même définition que celle donnée ci-dessus, ledit groupe étant substitué par au moins un groupe alkyle de définition identique à celle donnée ci-dessus.

Par groupe -O-alkyle, -O-aryle, on entend un groupe alkyle ou un groupe aryle, répondant à la même définition que celle donnée ci-dessus, le groupe alkyle ou aryle étant, dans ce cas, relié à une autre partie du monomère par l'intermédiaire d'un atome d'oxygène.

Par groupe perfluoré, on entend un groupe dont tous les atomes d'hydrogène sont substitués par des atomes de fluor.

Lorsque l'on précise que un ou plusieurs atomes d'oxygène, d'azote, de soufre et/ou de sélénium peuvent s'intercaler dans lesdits groupes (à savoir les groupes alkyle, aryle, alkylaryle, -O-aryle, -O-alkyle), cela signifie, en d'autres termes, qu'un atome de carbone est remplacé par un groupe -O-, -S-, -N- ou -Se-.

Par groupe éthylénique, on entend un groupe carboné comprenant deux atomes de carbone liés par une double liaison, ce groupe étant susceptible d'être polymérisé par voie radicalaire. Un groupe éthylénique particulier est un groupe vinyle CH₂=CH-, (alkyl)acrylate, tel qu'un groupe (méth)acrylate.

Par groupe acyle, on entend un groupe -CO-alkyle, le groupe alkyle répondant à la même définition que celle donnée ci-dessus.

Par sel, on entend les composés de structure ionique. Par exemple, on peut citer les sels carboxylates métalliques, lorsque R' correspond à OR₁₃ avec R₁₃ étant un métal. Dans ce cas de figure, par métal, on entend classiquement un métal monovalent, tel qu'un métal alcalin, comme Na, K.

Par élément métallique, on entend, par exemple, un métal alcalin, un métal alcalino-terreux, un métal de transition, un lanthanide, un actinide ainsi que les éléments Al, Ga, Ge, In, Sn, Sb, Tl, Pb, Bi et Po.

En particulier, l'élément métallique est avantageusement un lanthanide, tel que l'ytterbium.

On précise que les indices k, l, m représente le nombre de répétitions du motif pris entre parenthèses, ce nombre pouvant aller de 0 à 20. Des monomères particuliers peuvent être ceux, pour lesquels R est un groupe de formule : 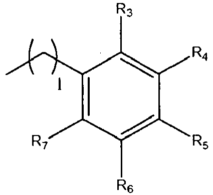 et l'un au moins des R¹ et R² est un groupe de formule : 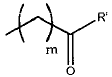 R₃ à R₇, R', l et m ayant les mêmes significations que celles explicitées ci-dessus, avec toujours la condition que l'un au moins des R₃ à R₇ représente un groupe éthylénique.

Plus particulièrement, des monomères conformes à la définition donnée ci-dessus sont des monomères pour lesquels R est un groupe de formule : 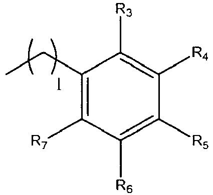 R₁ est un groupe de formule : 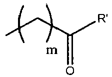 et R₂ est un atome d'hydrogène, l et m, R₃ à R₇ et R' ayant les mêmes significations que celles données ci-dessus, avec la condition que l'un au moins des R₃ à R₇ représente un groupe éthylénique. En particulier, l et m peuvent être égaux à 1.

Un monomère particulier de ce type répond à la formule (II) suivante : 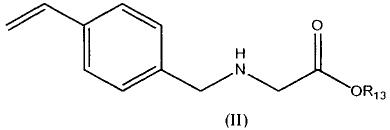 R₁₃ représentant, en particulier, H, un métal tel qu'un métal alcalin (comme Na, K) ou un groupe alkyle, tel qu'un groupe éthyle.

Un autre groupe de monomères tombant sous le coup de la définition des monomères de formule (I) correspond aux monomères pour lesquels R est un groupe de formule : 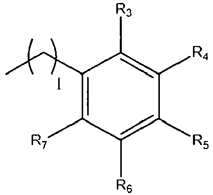 R₁ est un groupe de formule : 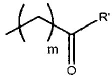 et R₂ est un groupe de formule : 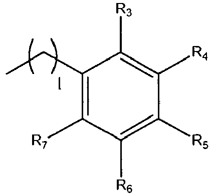 l et m, R₃ à R₇ et R' ayant les mêmes significations que celles données ci-dessus, avec la condition que l'un au moins des R₃ à R₇ représentent un groupe éthylénique. En particulier, l et m peuvent être égaux à 1.

Un monomère particulier de ce type répond à la formule (III) suivante : 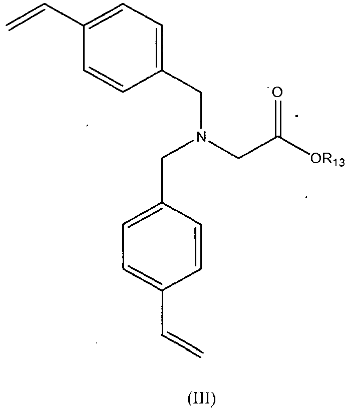 R₁₃ représentant, en particulier, H, un métal (tel qu'un métal alcalin comme Na, K) ou un groupe alkyle, tel qu'un groupe éthyle.

D'autres monomères susceptibles d'être utilisés, avantageusement, dans le procédé de l'invention peuvent être des monomères comportant une amine cyclique comprenant au moins deux atomes d'azote.

Des monomères particuliers de ce type répondent à la formule (IV) suivante : 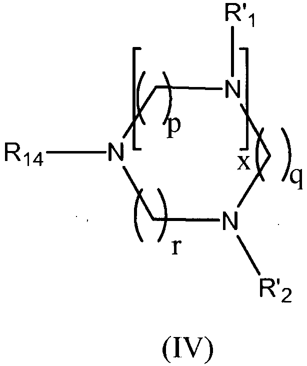 dans laquelle :
- R₁₄ représente un groupe choisi parmi les groupes de formules suivantes : 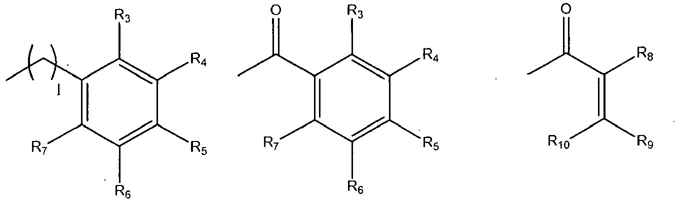 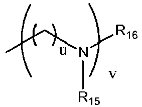
- R'₁ et R'₂ représentent, indépendamment, un groupe alkyle, un groupe aryle ou un groupe de formules suivantes : 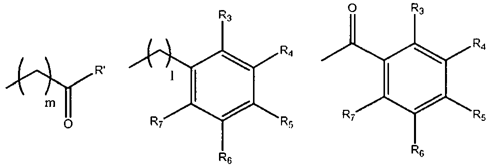 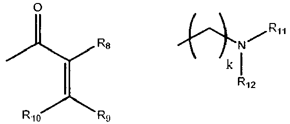 R₁₁ et R₁₂ correspondant, indépendamment, à des groupes répondant à la même définition que R'₁ et R'₂ donnée ci-dessus ;
- R' est un groupe OR₁₃ ou amine ;
- R₃, R₄, R₅, R₆ et R₇ représentent, indépendamment, H, un groupe éthylénique, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés, un ou plusieurs atomes d'oxygène, d'azote, de soufre et/ou de sélénium pouvant s'intercaler dans lesdits groupes, à condition que l'un au moins des R₃, R₄, R₅, R₆, R₇ représente un groupe éthylénique;
- R₈, R₉ et R₁₀ représentent, indépendamment, H, un groupe éthylénique, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés, un ou plusieurs atomes d'oxygène, d'azote, de soufre et/ou de sélénium pouvant s'intercaler dans lesdits groupes ;
- R₁₅ représente un groupe de formules suivantes : 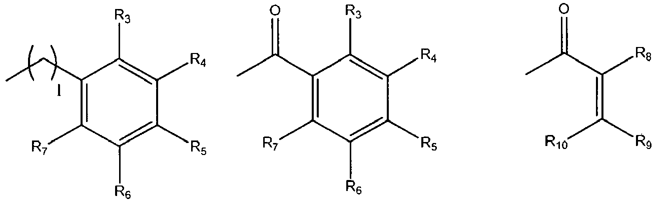 les R₃ à R₁₀ étant tels que définis ci-dessus ;
- R₁₃ représente H, un métal, un groupe alkyle, un groupe aryle, un groupe acyle ou un groupe alkylaryle, lesdits groupes alkyle, aryle, alkylaryle étant éventuellement perfluorés et un ou plusieurs atomes d'oxygène, de soufre et/ou de sélénium pouvant s'intercaler dans lesdits groupes ;
- R₁₆ représente un groupe de formule : 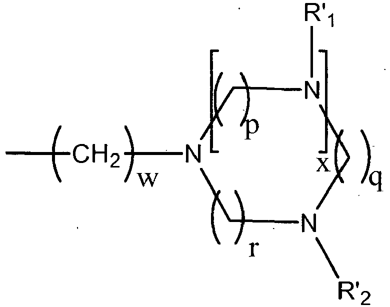 les R'₁ et R'₂ étant tels que définis ci-dessus ;
- k, l, m, u, p, q, r, x et w sont des entiers allant de 0 à 20, v est un entier allant de 1 à 20, à la condition que, lorsque x est égal à 0, (r+q) est au moins égale à 2, et lorsque x est égal à 1, au moins l'un des p, q, r est différent de 0.

On précise que p, q, r, x, k, l, m, u, v et w correspondent au nombre de répétitions du motif pris entre parenthèses (pour p, q, r, k, l, m, u, v et w) ou entre crochets (pour x).

Avantageusement, des monomères intéressants sont des monomères, pour lesquels R₁₄ représente un groupe de formule suivante : 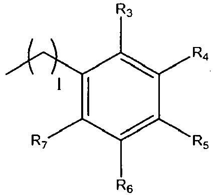 et l'un au moins des R'₁ et R'₂ représente 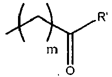 les R₃ à R₇, R', l et m répondant à la même définition que celle donnée ci-dessus, p, q, r et x étant avantageusement, au moins égaux à 1, à la condition toujours que l'un au moins des R₃ à R₇ représente un groupe éthylénique.

Plus particulièrement, des monomères conformes à la définition donnée ci-dessus sont des monomères pour lesquels R₁₄ est un groupe de formule : 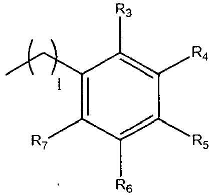 R'₁ et R'₂ représentent un groupe de formule : 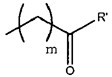 les R₃ à R₇, R', l et m répondant à la même définition que celle donnée ci-dessus, p, q, r et x étant, avantageusement au moins égaux à 1, à la condition toujours que l'un au moins des R₃ à R₇ représente un groupe éthylénique. En particulier, l et m peuvent être des entiers égaux à 1 et p, q, r et x peuvent être des entiers égaux à 2.

Un monomère particulier répondant à la définition ci-dessus est un monomère répondant à la formule (V) suivante : 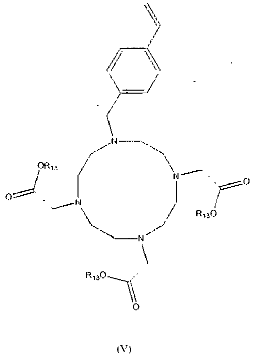 R₁₃ représentant, en particulier, H, un groupe alkyle, tel qu'un groupe éthyle, ou un métal.

Ainsi, pour le monomère de formule (V), R₁₄ correspond à un groupe de formule : 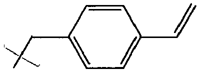 tandis que R'₁ et R'₂ correspondent à un groupe de formule -CH₂-COOR₁₃, et p, q, r et x sont des entiers égaux à 2.

D'autres monomères conformes à la définition donnée ci-dessus sont des monomères pour lesquels R₁₄, R'₁ et R'₂ répondent à la formule suivante : 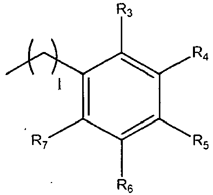 les R₃ à R₇, l répondant à la même définition que celle donnée ci-dessus, p, q, r et x étant, avantageusement au moins égaux à 1, à la condition toujours que l'un au moins des R₃ à R₇ représente un groupe éthylénique. En particulier, l peut être un entier égal à 1 et p, q, r et x peuvent être des entiers égaux à 2.

Un monomère particulier répondant à la définition donnée ci-dessus est un monomère répondant à la formule suivante :

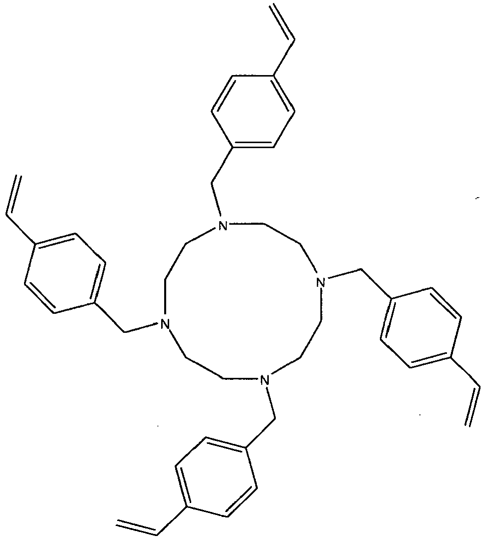

Avantageusement, R₁₄ peut représenter, également, un groupe de formule : 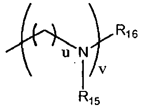 et l'un au moins des R'₁ et R'₂ représente : 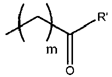 R₁₅, R₁₆, R', m, u et v répondant aux mêmes définitions que celles données ci-dessus, et p, q, r et x étant, avantageusement, au moins égaux à 1.

On précise que, lorsque R₁₄ correspond à un groupe de formule : 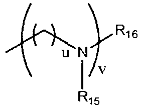 les monomères peuvent être représentés par la formule générale suivante :

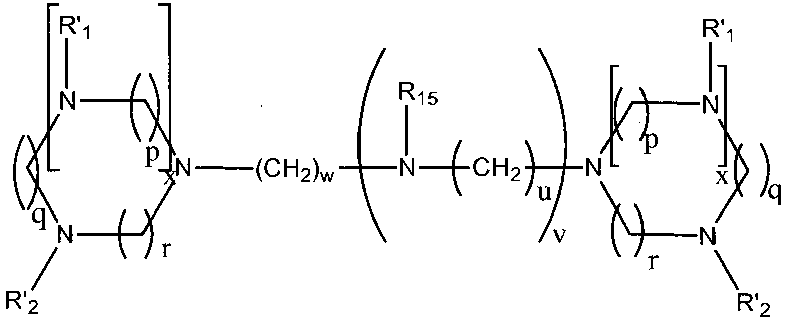

Un groupe de monomères particuliers tombant sous le coup de la définition donnée ci-dessus correspond à ceux pour lesquels R₁₅ correspond à un groupe de formule : 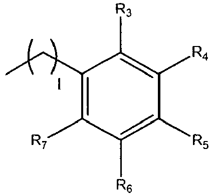 l, et les R₃ à R₇ répondant à la même définition que celle donnée ci-dessus, avec la condition que l'un au moins des R₃ à R₇ représentent un groupe éthylénique, et les groupes R'₁ et R'₂ représentent un groupe de formule : 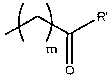 avec m et R' répondant aux mêmes définitions que celles données ci-dessus, p, q, r et x étant, avantageusement, au moins égaux à 1. En particulier, p, q, r, x, u, v et w représentent, par exemple, un entier égal à 2.

Un monomère particulier entrant sous le coup de la définition précédente répond à la formule (VI) suivante : 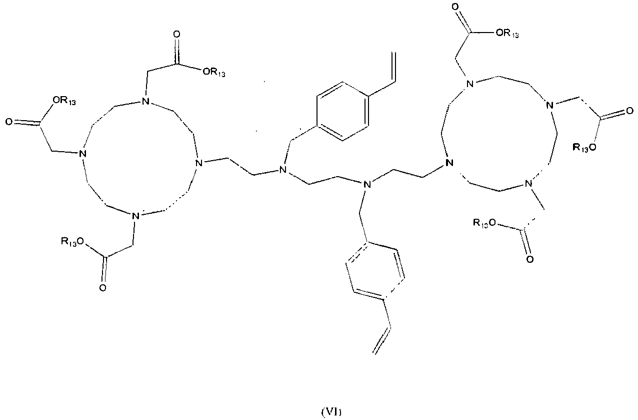 R₁₃ représentant, en particulier, H, un métal, ou un groupe alkyle, tel qu'un groupe éthyle,
et les sels éventuels de celui-ci.

Ainsi, pour ce monomère de formule (VI), les R₁₅ représentent un groupe de formule : 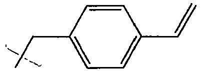 tandis que R'₁ et R'₂ correspondent à un groupe de formule -CH₂-COOR₁₃, et p, q, r, x, u, v et w sont des entiers égaux à 2.

Enfin, d'autres monomères susceptibles d'être utilisés peuvent être des monomères éthyléniques comprenant au moins un groupe aromatique hétérocyclique, tel que le monomère vinylimidazole répondant à la formule suivante :

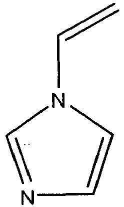

Outre les monomères susmentionnés, la phase organique peut comprendre un ou plusieurs comonomères, lesdits comonomères étant, généralement différents des monomères susmentionnés.

Ces comonomères peuvent être choisis parmi les monomères styréniques ou les monomères acrylates.

Avantageusement, les comonomères comprennent au moins deux groupes éthyléniques, assurant ainsi un rôle d'agent de réticulation. Les matériaux ainsi obtenus présentent une bonne tenue mécanique.

Des comonomères susceptibles d'être utilisés peuvent être des monomères styréniques de formule (VII) suivante : 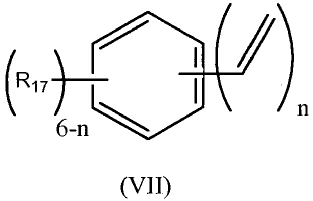 dans laquelle les (6-n) R₁₇, identiques ou différents, représentent un atome d'hydrogène, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés et n est un entier allant de 1 à 3, de préférence, n étant égal à 2.

En particulier, un comonomère approprié peut être le divinylbenzène, en particulier le 1,4-divinylbenzène.

Des comonomères susceptibles d'être utilisés peuvent être également des composés acrylates de formule (VIII) suivante : 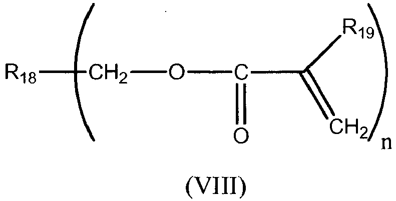 dans laquelle R₁₈ représente un groupe alkyle, R₁₉ représente H ou un groupe alkyle et n étant un entier allant de 1 à 3.

En particulier, un comonomère approprié de ce type peut être le triméthylolpropanetriacrylate (connu sous l'abréviation TMPTA) de formule suivante :

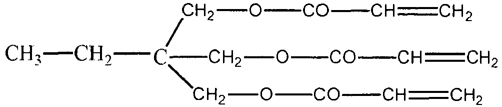

En outre, la phase organique comprend au moins un initiateur de polymérisation, tel qu'un amorceur radicalaire classiquement choisi parmi les composés peroxydes, les azonitriles (tel que le 2,2'-azobisisobutyronitrile (connu sous l'abréviation AiBN), le 2,2'-azodi(2,4-diméthyl-4-méthoxyvaléronitrile) (également dénommé V70), les azoesters, les azoamides.

L'initiateur peut être introduit, dans le milieu de polymérisation, selon des quantités variables, par exemple, selon des quantités pouvant aller de 0 à 50% massique, par rapport à la masse totale de monomères mis en jeu.

La phase organique peut comprendre, en outre, un solvant porogène, qui peut être un solvant organique polaire, apolaire et peut être choisi parmi les solvants éthers (tels que le tétrahydrofurane), le diméthylsulfoxyde, des solvants phthalates (tels que le diméthylphthalate, le dibutylphthalate), des solvants alcooliques (tels que le méthanol, l'éthanol), des solvants aromatiques (tels que le toluène, le fluorobenzène), des solvants cétones.

Enfin, la phase organique peut comprendre un ou plusieurs agents tensioactifs, tels que des ammoniums quaternaires, des phospholipides, du SPAN 80®.

En particulier, l'étape a) peut être mise en oeuvre en présence d'un monomère de formule (III) susmentionnée, de divinylbenzène et de styrène.

Selon un mode particulier de réalisation, l'étape a) peut être mise en oeuvre par la succession d'opérations suivantes :
*la formation de ballons liquides par encapsulation d'une première phase aqueuse W₁ dans une phase organique, cette phase organique comprenant au moins un monomère éthylénique comprenant au moins un ligand chélateur d'au moins un élément métallique et au moins un initiateur de polymérisation ;
*mise en émulsion dans une deuxième phase aqueuse W₂ des ballons ainsi formés;
*la polymérisation du ou des monomères constitutifs de la phase organique, moyennant quoi l'on obtient des ballons polymériques.

Concrètement, les ballons liquides peuvent être formé(e)s à la sortie d'un système d'injection. En ce qui concerne la formation de ballons liquides, le système d'injection peut comprendre une première entrée sous forme de capillaire pour l'alimentation en phase organique et une seconde entrée sous forme de capillaire pour l'alimentation en phase aqueuse W₁, ces deux capillaires se rejoignant au niveau d'un orifice de sortie où se forme le ballon liquide.

Les ballons liquides ainsi formés sont ensuite « cueilli(e)s » à l'orifice de sortie du système d'injection par une deuxième phase aqueuse W₂, dans laquelle lesdits ballons vont se retrouver sous forme d'émulsion tel que stipulé par l'étape de mise en suspension telle que mentionnée ci-dessus.

Pour assurer une bonne concentricité des ballons liquides formés, il est préférable que la densité de la phase organique soit supérieure à celle de la densité de la phase aqueuse W₁.

De plus pour assurer la tenue de l'émulsion formée par mise en contact d'une phase aqueuse W₂ avec les ballons formés lors de l'étape de formation, il est préférable que la densité de la phase aqueuse W₂ soit supérieure à la densité apparente des ballons formés lors l'étape de formation, c'est-à-dire, dans le cas de la fabrication des ballons, la densité de l'ensemble formé par la phase organique et la phase aqueuse W₁, par exemple, la densité de la phase aqueuse W₂ étant supérieure de 1% au plus à la densité apparente des ballons formés.

Les constituants de la phase aqueuse W₂, de la phase organique et, dans le cas de la formation des ballons, de la phase aqueuse W₁, ainsi que leurs proportions respectives, seront donc choisis en conséquence.

Il s'entend que la phase organique répond à la même définition donnée ci-dessus pour la description de l'étape a).

L'étape de polymérisation des monomères présents dans la phase organique susmentionnée peut être réalisée par chauffage à une température allant de 40 à 100°C.

Une fois la polymérisation effectuée, les ballons formés peuvent être isolés par filtration avant d'être soumis à l'étape b).

Avant la polymérisation et durant la mise en oeuvre de celle-ci, le ou les monomères comprenant au moins un ligand chélateur d'un élément métallique peuvent être protégés par un groupe protecteur, lequel peut avoir pour fonction de rendre lesdits monomères solubles dans la phase organique. Dans ce cas, il est nécessaire, avant de procéder à la mise en oeuvre de l'étape b), de procéder à la déprotection du ligand de sorte à le rendre fonctionnel pour l'étape b). Cette étape de déprotection peut consister à mettre en contact les ballons polymérisés avec un réactif chimique de déprotection ou encore, à le soumettre à un stimulus physique, par exemple, à une irradiation, lorsque le groupe protecteur est apte à être clivé par une telle irradiation.

L'étape b) du procédé consiste à mettre en contact les ballons ainsi polymérisés avec une solution comprenant au moins un élément métallique, lequel élément métallique peut se présenter sous forme d'un sel ou d'un complexe d'élément métallique.

La solution peut consister en un solvant organique ou mélange de solvants organiques dans lequel est solubilisé un sel ou un complexe métallique de l'élément métallique à complexer avec le matériau polymérique constitutif des parois des ballons ou des billes.

A titre d'exemples de sel ou complexe métallique d'un élément métallique, on peut citer les chlorures, bromures, fluorures, iodures, iodates, nitrates, sulfates, sulfonates, sulfites, nitrites, phosphates, phosphites, cyanures, azidures, hydroxyles, chlorates, perchlorates, acétates, trifluorométhanesulfonates, trifluoroacétates, trichloroacétates, alcoxydes, acétylacétonates, cyclopentadiényles, alcynures métalliques.

D'un point de vue concret, l'étape de mise en contact b) peut consister à immerger les ballons polymérisés dans une solution comprenant un sel ou complexe d'un élément métallique pendant un temps approprié pour imprégner les ballons polymérisés et permettre aux éléments métalliques de se complexer avec le matériau polymérique constitutif de ces ballons.

Après cette étape b), le procédé de l'invention peut comprendre une étape de lavage des ballons ainsi dopés, de sorte à éliminer la solution comprenant un sel ou complexe d'élément métallique stagnante dans la cavité centrale des ballons. Cette étape de lavage peut consister à mettre en contact les ballons dopés avec un solvant qui va s'échanger avec le solvant comprenant le sel ou complexe d'élément métallique. Cette étape de lavage peut être renouvelée une ou plusieurs fois.

Contrairement aux modes de réalisation de l'art antérieur, où l'étape de lavage s'accompagnait d'un lessivage des éléments métalliques présents dans la paroi des ballons les éléments métalliques complexés au matériau polymérique constitutif des parois des ballons réalisés avec le procédé de l'invention ne sont pas affectés par cette étape, car ces éléments sont fixés sur le matériau par le biais de liaisons fortes : des liaisons de coordination ou des liaisons ioniques.

Enfin, le procédé peut comprendre, après l'étape b) et l'éventuelle étape de lavage, une étape de séchage des ballons dopés. Cette étape de séchage peut consister à soumettre lesdits ballons à une lyophilisation ou à un séchage au dioxyde de carbone CO₂ supercritique.

Le procédé de l'invention peut être mis en oeuvre dans un dispositif spécialement conçu pour la mise en oeuvre d'un procédé tel que précédemment défini, comprenant :
*un système d'injection comportant une ou plusieurs entrées pour son alimentation en phase organique et éventuellement en phase aqueuse W₁, et un orifice de sortie pour la formation des ballons liquides ;

*une chambre fermée dans laquelle est logée l'orifice de sortie du système d'injection, cette chambre comportant une ou plusieurs entrées pour son alimentation en phase aqueuse W₂ et une sortie pour l'évacuation hors de cette chambre de l'émulsion résultant de la mise en suspension des ballons liquides dans cette phase aqueuse W₂ ;
*des moyens pour réceptionner l'émulsion formée dans ladite chambre fermée.

Les ballons formés selon le procédé de l'invention se présentent sous forme d'objets en mousse polymère, pouvant présenter une masse volumique allant de 10 à 250 mg.cm⁻³ et peuvent être utilisés pour constituer des cibles ou éléments de cibles pour effectuer des expériences de confinement inertiel.

L'invention va être, à présent, décrite à la lumière d'un exemple de mise en oeuvre du procédé conforme à l'invention, cet exemple étant fourni qu'à titre d'illustration de l'invention et n'en constituant en aucun cas une limitation.

### BRÈVE DESCRIPTION DES DESSINS

La figure 1 représente une image prise par une caméra CDD montrant la formation d'un microballon liquide à la sortie du système d'injection triphasique lors de la mise en oeuvre de l'exemple mentionné ci-dessous.
Les figures 2A et 2B représentent des photographies de microballons dopés à l'ytterbium obtenus lors de la mise en oeuvre de l'exemple mentionné ci-dessous (l'échelle de la photographie illustrée sur la figure 2A étant inférieure à celle de la figure 2B), ces photographies étant prises avant l'étape de séchage.
La figure 3 représente un diagramme représentant en abscisse la circularité C (en %) et en ordonnée la fréquence F (en %) des microballons dopés à l'ytterbium obtenus lors de la mise en oeuvre de l'exemple mentionné ci-dessous.
La figure 4 représente une photographie d'un microballon dopé à l'ytterbium obtenu après séchage au dioxyde de carbone CO₂ supercritique conformément à l'exemple décrit ci-dessous.
La figure 5 représente une vue en coupe obtenue par microscopie électronique à balayage d'un microballon dopé à l'ytterbium obtenu conformément à l'exemple décrit ci-dessous (avec un agrandissement de 2000).

### EXPOSÉ DÉTAILLÉ DE MODES DE RÉALISATION PARTICULIERS

### EXEMPLE

Cet exemple illustre l'élaboration de microballons en mousse dopée à l'ytterbium à partir d'un ligand chélateur polymérisable de formule suivante : 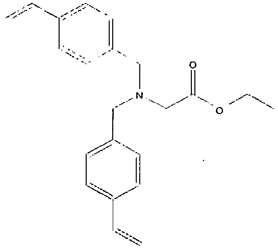 par la méthode d'injection triphasique.

La phase organique comprend les éléments suivants :
*deux amorceurs de polymérisation : 62 mg d'azoisobutyronitrile (AiBN) et 62 mg de 2,2'-azodi(2,4-diméthyl-4-méthoxyvaléronitrile) ;
*118 mg de SPAN® 80 ;
*un mélange des comonomères suivants : 17,5 mg de styrène, 332,5 mg de divinylbenzène (DVB) et 900 mg de ligand chélateur de formule susmentionnée ; *10,43 g de dibutylphtalate (DBP).

La phase organique est agitée jusqu'à dissolution complète des différents amorceurs et l'obtention d'une phase homogène. Celle-ci est ensuite dégazée sous azote (ou sous argon).

Pour éviter toute dégradation du système lors de la polymérisation (telle que des phénomènes de coalescence, de diffusion moléculaire ou d'inversion de phases), la phase organique susmentionnée est prégélifiée pendant 30 minutes à 40°C avant son utilisation.

Ensuite, la phase organique est transférée au niveau d'un injecteur triphasique qui permet de préformer les microballons liquides. Pour ce faire, une phase aqueuse (dite phase W₁) est injectée via un capillaire relativement fin ayant un diamètre interne de 150 µm, lui-même incorporé dans un second capillaire qui va permettre l'injection de la phase organique, lequel second capillaire a un diamètre interne de 450 µm. Cette injection est réalisée au sein d'une seconde phase aqueuse (dite phase W₂) comprenant 5% en masse de PVA (alcool polyvinylique), dont le débit constant et contrôlé de 45 mL/min permet d'arracher les microballons au diamètre souhaité, lequel s'échelonne de 1700 µm à 2300 µm.

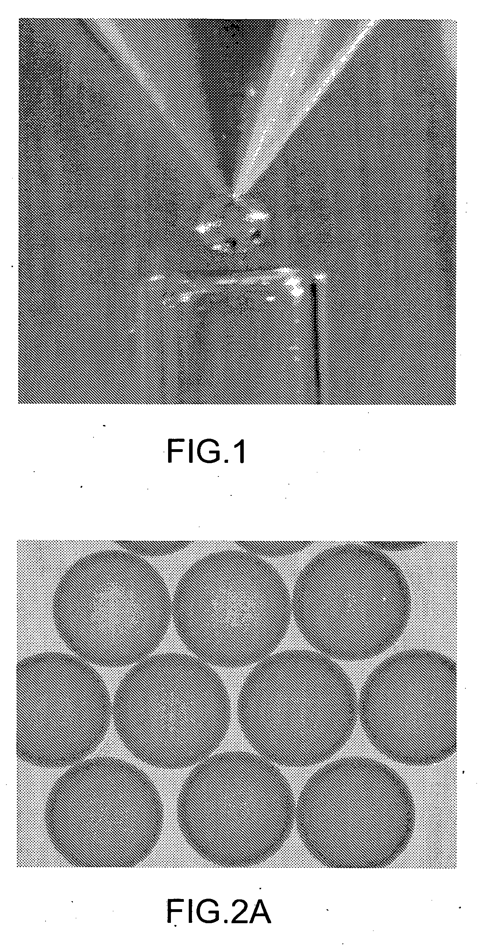

La figure 1 illustre la formation d'un microballon à la sortie de l'injecteur triphasique.

Les microballons formés sont ensuite placés sous agitation horizontale, afin de procéder à l'étape de polymérisation par voie thermique (60°C) pendant 3 heures sous balayage d'azote. En suivant le même mode d'agitation, ils subissent ensuite une série de lavages à l'eau, puis sont immergés dans l'éthanol afin d'éliminer le DPB et la phase W₁.

Les microballons sont ensuite conditionnés dans une fiole de 10 cm³ puis mis sous agitation douce sur rouleur (15 à 20 tours/minute).

Ensuite, l'étape de saponification des fonctions esters du polymère constitutif des microballons est réalisée de la façon suivante.

Les microballons obtenus sont immergés dans une solution éthanolique de soude (plus précisément dans 30 mL d'éthanol additionné de 0,3 mL de soude aqueuse à 35%) durant 5 jours afin de saponifier les fonctions esters.

L'excès de soude est ensuite éliminé à l'aide d'une solution éthanol/eau (95/5).

Les microballons ainsi saponifiés sont ensuite immergés dans une solution éthanolique de triflate d'ytterbium (830 mg de Yb(OTf)₃ dans 30 mL d'éthanol) pendant deux jours.

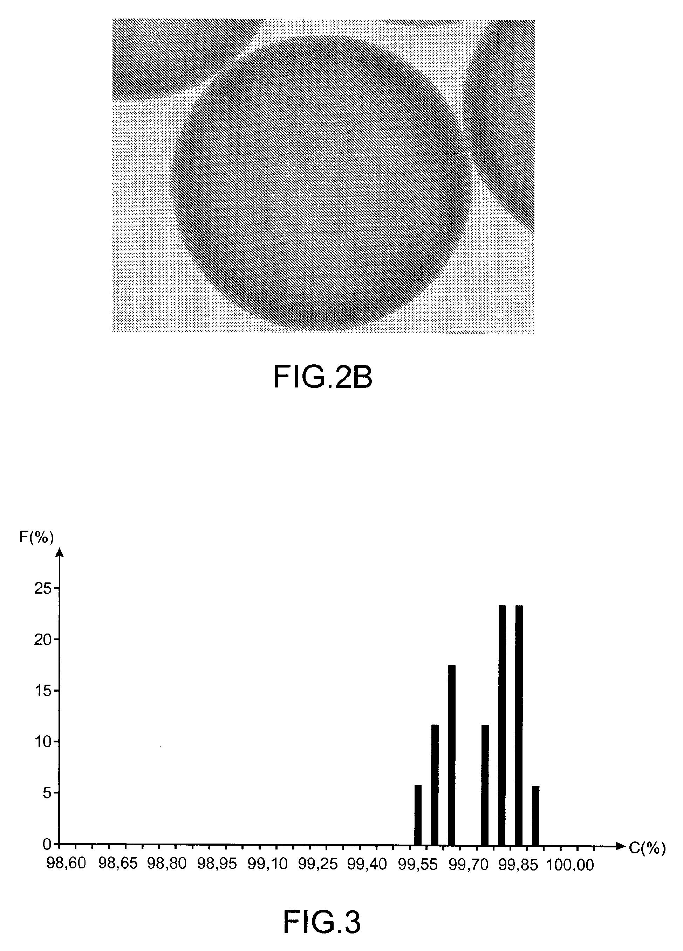

Les figures 2A et 2B illustrent, pour différents agrandissements, les microballons obtenus.

Les microballons dopés à l'ytterbium sont ensuite séchés au CO₂ supercritique à 180 bars sous 50°C. Les microballons obtenus présentent une masse volumique d'environ 200 mg/cm³.

La figure 3 montre que les microballons obtenus présentent une circularité située de 99,55 à 99,85%.

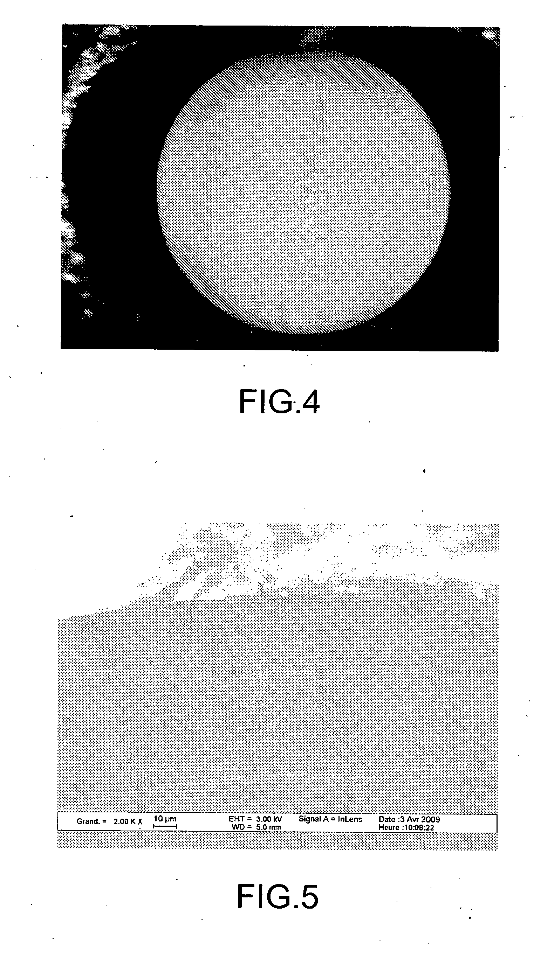

Les figures 4 et 5 montrent un microballon obtenu conformément à cet exemple et notamment, sur la coupe de la figure 5, une bonne homogénéité de structure entre les surfaces internes et externes et la paroi du microballon.

Le taux d'ytterbium inséré dans les microballons est difficile à évaluer par analyse élémentaire du fait de la faible masse des microballons à caractériser (de l'ordre de 150 µg par microballon). Toutefois, l'analyse par fluorescence X d'échantillons réalisés permet d'estimer le taux de dopage en ytterbium entre 5 et 8% massique.

## Revendications

1. Procédé d'élaboration de ballons polymériques dopés par au moins un élément métallique comprenant les étapes suivantes :
a) une étape de formation de ballons polymériques par polymérisation, dans une phase organique comprenant un initiateur de polymérisation, d'au moins un monomère éthylénique comprenant au moins un ligand chélateur d'au moins un élément métallique ;
b) une étape de mise en contact desdits ballons polymériques avec une solution comprenant au moins un élément métallique,
dans lequel l'étape a) est mise en oeuvre par la succession d'opérations suivantes :
*la formation de ballons liquides par encapsulation d'une première phase aqueuse W₁ dans une phase organique, cette phase organique comprenant au moins un monomère éthylénique comprenant au moins un ligand chélateur d'au moins un élément métallique et au moins un initiateur de polymérisation ;
*mise en émulsion dans une deuxième phase aqueuse W₂ des ballons ainsi formés ;
*la polymérisation du ou des monomères constitutifs de la phase organique, moyennant quoi l'on obtient des ballons polymériques.

2. Procédé d'élaboration selon la revendication 1, dans lequel le monomère éthylénique comprenant au moins un ligand chélateur d'au moins un élément métallique est un monomère comportant au moins un groupe porteur d'un doublet libre et/ou au moins un groupe chargé négativement.

3. Procédé d'élaboration selon la revendication 1 ou 2, dans lequel le monomère éthylénique comprenant au moins un ligand chélateur d'au moins un élément métallique est un monomère répondant à la formule (I) suivante : 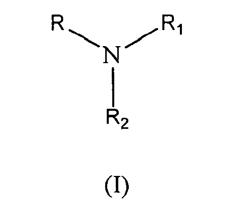 dans laquelle :
- R représente un groupe choisi parmi les groupes de formules suivantes : 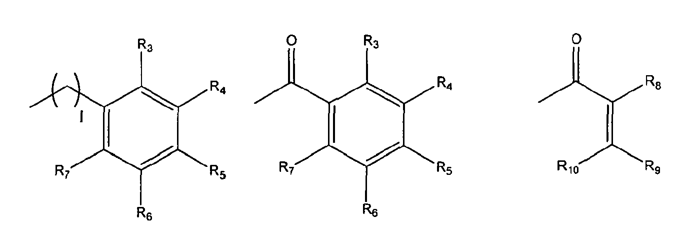
- R₁ et R₂ représentent, indépendamment, H, un groupe alkyle, un groupe aryle ou un groupe de formules suivantes : 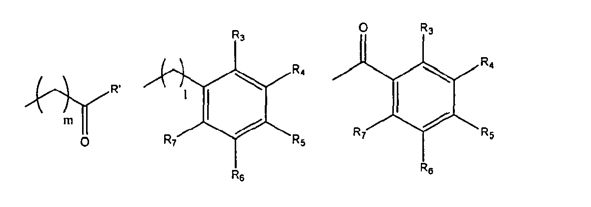 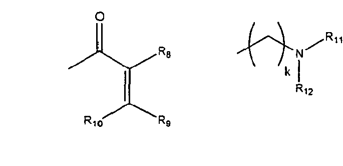 R₁₁ et R₁₂ correspondant, indépendamment, à des groupes répondant à la même définition que R₁ et R₂ donnée ci-dessus ;
- R' est un groupe OR₁₃ ou amine;
- R₃, R₄, R₅, R₆, R₇, représentent, indépendamment, H, un groupe éthylénique, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés, un ou plusieurs atomes d'oxygène, d'azote, de soufre et/ou de sélénium pouvant s'intercaler dans lesdits groupes, à condition que l'un au moins des R₃, R₄, R₅, R₆, R₇ représente un groupe éthylénique;
- R₈, R₉ et R₁₀ représentent, indépendamment, H, un groupe éthylénique, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés, un ou plusieurs atomes d'oxygène, d'azote, de soufre et/ou de sélénium pouvant s'intercaler dans lesdits groupes ;
- R₁₃ représente H, un métal, un groupe alkyle, un groupe aryle, un groupe acyle ou un groupe alkylaryle, lesdits groupes alkyle, aryle, alkylaryle étant éventuellement perfluorés et un ou plusieurs atomes d'oxygène, de soufre et/ou de sélénium pouvant s'intercaler dans lesdits groupes ;
- k, l et m sont des entiers allant de 0 à 20 ;
et les sels de ceux-ci.

4. Procédé selon la revendication 3, dans lequel R est un groupe de formule : 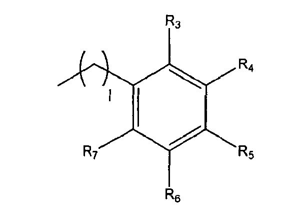 et l'un au moins des R¹ et R² est un groupe de formule : 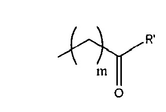 R₃ à R₇, R', l et m ayant les mêmes significations que celles exposées à la revendication 3.

5. Procédé selon la revendication 3 ou 4, dans lequel R est un groupe de formule : 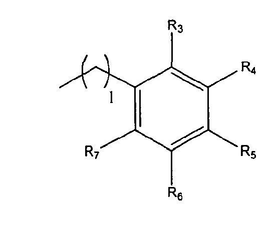 R₁ est un groupe de formule : 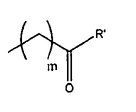 et R₂ est un atome d'hydrogène, R₃ à R₇, R', l et m ayant les mêmes significations que celles exposées à la revendication 3.

6. Procédé selon la revendication 5, dans lequel le monomère répond à la formule (II) suivante : 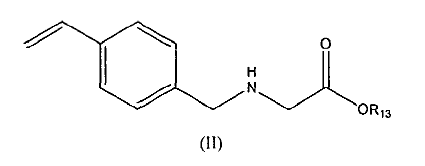 R₁₃ représentant H, un métal ou un groupe alkyle.

7. Procédé selon la revendication 4 ou 5, dans lequel R est un groupe de formule : 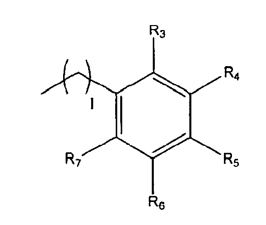 R₁ est un groupe de formule : 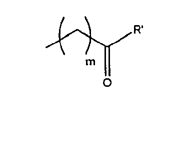 et R₂ est un groupe de formule : 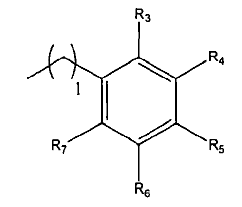 l et m, R₃ à R₇ et R' ayant les mêmes significations que celles données à la revendication 3.

8. Procédé selon la revendication 7, dans lequel le monomère répond à la formule (III) suivante : 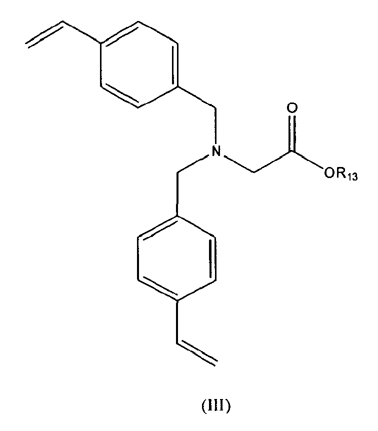 R₁₃ représentant H, un métal ou un groupe alkyle.

9. Procédé selon l'une quelconque des revendications 1 ou 2, dans lequel le monomère comprend une amine cyclique comprenant au moins deux atomes d'azote.

10. Procédé selon la revendication 9, dans lequel le monomère répond à la formule (IV) suivante : 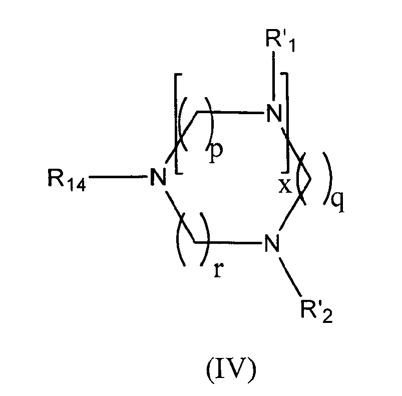 dans laquelle :
- R₁₄ représente un groupe choisi parmi les groupes de formules suivantes : 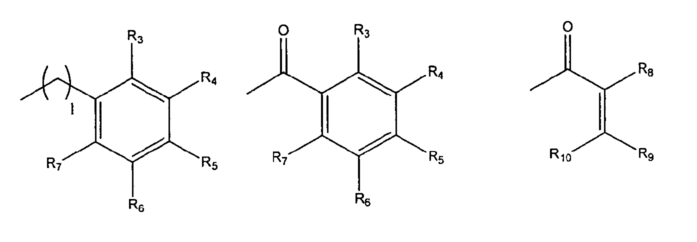 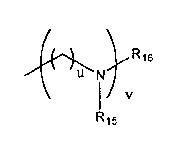
- R'₁ et R'₂ représentent, indépendamment, un groupe alkyle, un groupe aryle ou un groupe de formules suivantes : 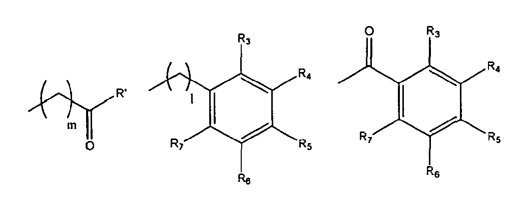 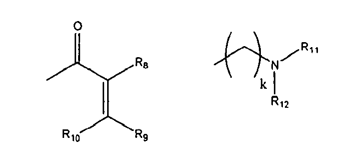 R₁₁ et R₁₂ correspondant, indépendamment, à des groupes répondant à la même définition que R'₁ et R'₂ donnée ci-dessus ;
- R' est un groupe OR₁₃ ou amine ;
- R₃, R₄, R₅, R₆ et R₇ représentent, indépendamment, H, un groupe éthylénique, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés, un ou plusieurs atomes d'oxygène, d'azote, de soufre et/ou de sélénium pouvant s'intercaler dans lesdits groupes, à condition que l'un au moins des R₃, R₄, R₅, R₆, R₇ représente un groupe éthylénique;
- R₈, R₉ et R₁₀ représentent, indépendamment, H, un groupe éthylénique, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés, un ou plusieurs atomes d'oxygène, d'azote, de soufre et/ou de sélénium pouvant s'intercaler dans lesdits groupes ;
- R₁₅ représente un groupe de formules suivantes : 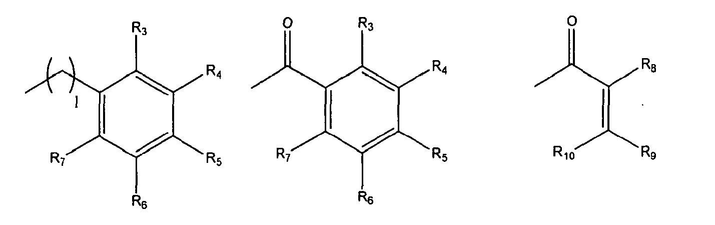 les R₃ à R₁₀ étant tels que définis ci-dessus ;
- R₁₃ représente H, un métal, un groupe alkyle, un groupe aryle, un groupe acyle ou un groupe alkylaryle, lesdits groupes alkyle, aryle, alkylaryle étant éventuellement perfluorés et un ou plusieurs atomes d'oxygène, de soufre et/ou de sélénium pouvant s'intercaler dans lesdits groupes ;
- R₁₆ représente un groupe de formule : 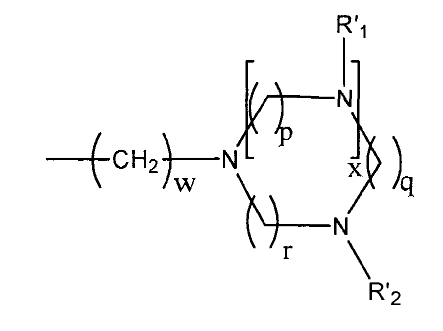 les R'₁ et R'₂ étant tels que définis ci-dessus ;
- k, l, m, u, p, q, r, x et w sont des entiers allant de 0 à 20, v est un entier allant de 1 à 20, à la condition que, lorsque x est égal à 0, (r+q) est au moins égale à 2, et lorsque x est égal à 1, au moins l'un des p, q, r est différent de 0.

11. Procédé selon la revendication 10, dans lequel R₁₄ représente un groupe de formule suivante : 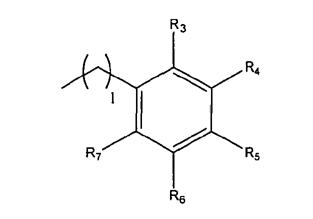 et l'un au moins des R'₁ et R'₂ représente : 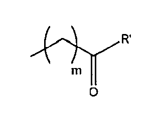 les R₃ à R₇, R', l et m répondant à la même définition que celle donnée à la revendication 10, p, q, r et x étant au moins égaux à 1.

12. Procédé selon la revendication 10 ou 11, dans lequel R₁₄ est un groupe de formule : 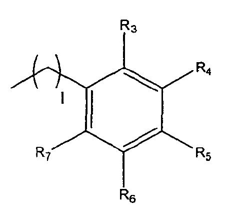 R'₁ et R'₂ représentent un groupe de formule : 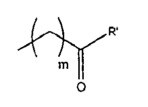 les R₃ à R₇, R', l et m répondant à la même définition que celle donnée à la revendication 10, p, q, r et x étant au moins égaux à 1.

13. Procédé selon l'une quelconque des revendications 10 à 12, dans lequel le monomère répond à la formule (V) suivante : 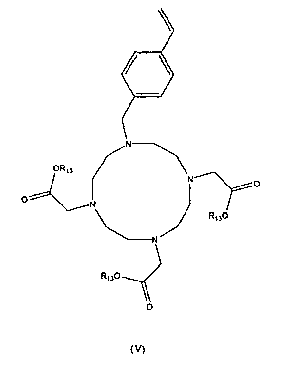 R₁₃ représentant H, un métal ou un groupe alkyle.

14. Procédé selon la revendication 10, dans lequel R₁₄ représente un groupe de formule : 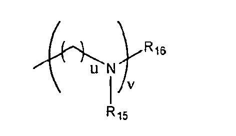 et l'un au moins des R'₁ et R'₂ représente : 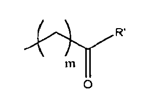 R₁₅, R₁₆, R', m, u et v répondant aux mêmes définitions que celles données à la revendication 10, p, q, r et x étant au moins égaux à 1.

15. Procédé selon l'une quelconque des revendications précédentes, dans lequel l'élément métallique est choisi parmi les métaux alcalins, les métaux alcalino-terreux, les métaux de transition, les lanthanides, les actinides ainsi que les éléments Al, Ga, Ge, In, Sn, Sb, Tl, Pb, Bi ou Po.

16. Procédé selon la revendication 15, dans lequel l'élément métallique est un élément lanthanide, tel que l'ytterbium.

17. Procédé selon l'une quelconque des revendications précédentes, dans lequel l'étape de polymérisation est réalisée en présence d'un ou plusieurs comonomères différents du monomère défini selon l'une quelconque des revendications 1 à 14.

18. Procédé selon la revendication 17, dans lequel le ou les comonomères sont choisis parmi les monomères styréniques et les monomères acrylates.

19. Procédé selon la revendication 17 ou 18, dans lequel le ou les comonomères comprennent au moins deux groupes éthyléniques.

20. Procédé selon la revendication 18 ou 19, dans le ou les comonomères répondent à l'une des formules (VII) ou (VIII) suivantes : 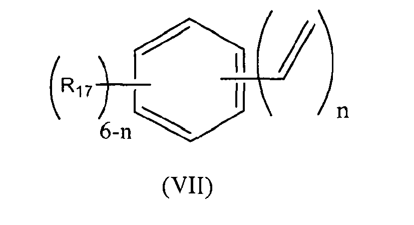 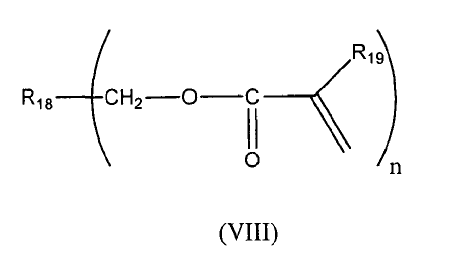 dans lesquelles les (6-n) R₁₇, identiques ou différents, représentent un atome d'hydrogène, un groupe alkyle, un groupe aryle, un groupe -O-aryle, un groupe -O-alkyle, un groupe acyle, un groupe alkylaryle ou un atome d'halogène, lesdits groupes alkyle, aryle, alkylaryle, -O-aryle, -O-alkyle étant éventuellement perfluorés, R₁₈ représente un groupe alkyle, R₁₉ représente H ou un groupe alkyle et n étant un entier allant de 1 à 3.

21. Procédé selon la revendication 20, dans lequel le comonomère est le divinylbenzène.

22. Procédé selon la revendication 1, dans lequel l'étape a) a lieu en présence d'un monomère de formule (III) suivante : 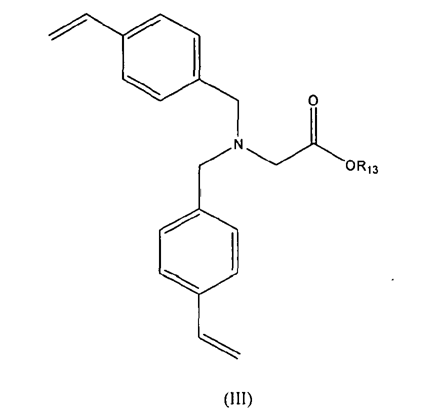 R₁₃ représentant H, un métal ou un groupe alkyle et du divinylbenzène et du styrène.

## Patentansprüche

1. Verfahren zur Herstellung mit mindestens einem Metallelement dotierter Polymerkugeln, das die folgenden Schritte umfasst:
a) einen Schritt der Bildung von Polymerkugeln durch Polymerisation in einer organischen Phase, die einen Polymerisationsinitiator und wenigstens ein einen Chelatisierungsliganden für wenigstens ein Metallelement enthaltendes ethylenisches Monomer umfasst;
b) einen Schritt des In-Kontakt-Bringens der Polymerkugeln mit einer wenigstens ein Metallelement umfassenden Lösung,
wobei Schritt a) durch die Abfolge folgender Arbeitsschritte ausgeführt wird:
* Bildung flüssiger Kugeln durch Verkapselung einer ersten wässrigen Phase W₁ in einer organischen Phase, wobei diese organische Phase wenigstens ein wenigstens einen Chelatisierungsliganden für wenigstens ein Metallelement enthaltendes ethylenisches Monomer und wenigstens einen Polymerisationsinitiator umfasst;
* Emulgieren der auf diese Weise gebildeten Kugeln in einer zweiten wässrigen Phase W₂;
* Polymerisation des oder der Monomerenbestandteile der organischen Phase, wodurch Polymerkugeln erhalten werden.

2. Herstellungsverfahren gemäß Anspruch 1, bei dem das wenigstens einen Chelatisierungsliganden für wenigstens ein Metallelement umfassende ethylenische Monomer ein Monomer ist, das wenigstens eine ein freies Elektronenpaar tragende Gruppe und/oder wenigstens eine negativ geladene Gruppe aufweist.

3. Herstellungsverfahren gemäß Anspruch 1 oder 2, bei dem das wenigstens einen Chelatisierungsliganden für wenigstens ein Metallelement umfassende ethylenische Monomer ein Monomer ist, das der folgenden Formel (I) entspricht: 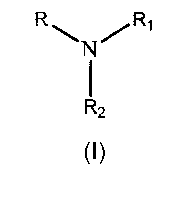 worin:
- R eine Gruppe bedeutet, die aus den Gruppen der folgenden Formeln ausgewählt ist: 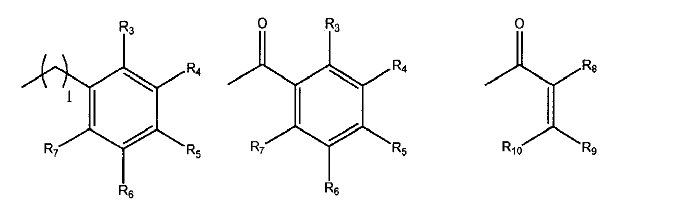
- R₁ und R₂ unabhängig H, eine Alkylgruppe, eine Arylgruppe oder eine Gruppe der folgenden Formeln bedeuten: 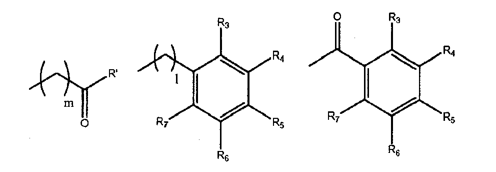 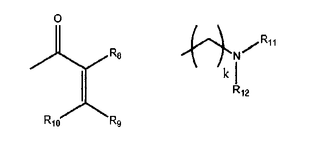 wobei R₁₁ und R₁₂ unabhängig Gruppen entsprechen, die dieselbe Definition wie die vorstehend angegebenen R₁ und R₂ aufweisen;
- R' eine Gruppe OR₁₃ oder ein Amin ist;
- R₃, R₄, R₅, R₆ und R₇ unabhängig H, eine ethylenische Gruppe, eine Alkylgruppe, eine Arylgruppe, eine Gruppe -O-Aryl, eine Gruppe -O-Alkyl, eine Acylgruppe, eine Alkylarylgruppe oder ein Halogenatom bedeuten, wobei die Alkyl-, Aryl-, Alkylaryl-, -O-Aryl- und -O-Alkylgruppen gegebenenfalls perfluoriert sind und durch ein oder mehrere Sauerstoff-, Stickstoff-, Schwefel- und/oder Selenatome in diesen Gruppen unterbrochen sein können, mit der Maßgabe, dass wenigstens eines von R₃, R₄, R₅, R₆ und R₇ eine ethylenische Gruppe bedeutet;
- R₈, R₉ und R₁₀ unabhängig H, eine ethylenische Gruppe, eine Alkylgruppe, eine Arylgruppe, eine Gruppe -O-Aryl, eine Gruppe -O-Alkyl, eine Acylgruppe, eine Alkylarylgruppe oder ein Halogenatom bedeuten, wobei die Alkyl-, Aryl-, Alkylaryl-, -O-Aryl- und -O-Alkylgruppen gegebenenfalls perfluoriert sind und durch ein oder mehrere Sauerstoff-, Stickstoff-, Schwefel- und/oder Selenatome in diesen Gruppen unterbrochen sein können;
- R₁₃ H, ein Metall, eine Alkylgruppe, eine Arylgruppe, eine Acylgruppe oder eine Alkylarylgruppe bedeuten, wobei die Alkyl-, Aryl- und Alkylarylgruppen gegebenenfalls perfluoriert sind und durch ein oder mehrere Sauerstoff-, Schwefel- und/oder Selenatome in diesen Gruppen unterbrochen sein können; und
- k, l und m ganze Zahlen von 0 bis 20 sind;
und deren Salze.

4. Verfahren gemäß Anspruch 3, bei dem R eine Gruppe der Formel: 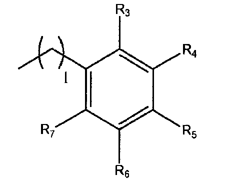 ist und wenigstens eines von R¹ und R² eine Gruppe der Formel 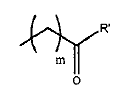 ist, wobei R₃ bis R₇, R', l und m dieselben Bedeutungen wie die in Anspruch 1 angeführten aufweisen.

5. Verfahren gemäß Anspruch 3 oder 4, bei dem R eine Gruppe der Formel 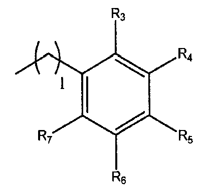 ist,
R₁ eine Gruppe der Formel 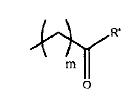 ist,
und R₂ ein Wasserstoffatom ist, wobei R₃ bis R₇, R', l und m dieselben Bedeutungen wie die in Anspruch 3 angeführten aufweisen.

6. Verfahren gemäß Anspruch 5, bei dem das Monomer der folgenden Formel (II) entspricht: 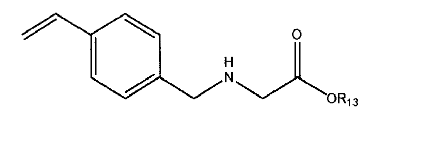 wobei R₁₃ H, ein Metall oder eine Alkylgruppe bedeutet.

7. Verfahren gemäß Anspruch 4 oder 5, bei dem R eine Gruppe der Formel 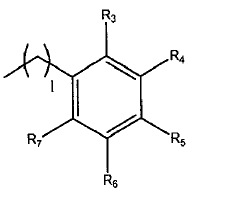 ist,
R₁ eine Gruppe der Formel 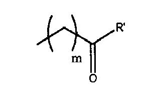 ist,
und R₂ eine Gruppe der Formel 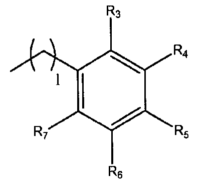 ist, wobei l und m, R₃ bis R₇ und R' dieselben Bedeutungen wie die in Anspruch 3 angeführten aufweisen.

8. Verfahren gemäß Anspruch 7, bei dem das Monomer der folgenden Formel (III) entspricht: 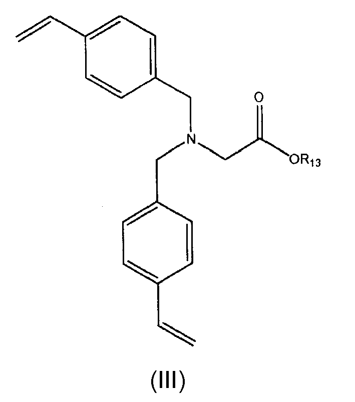 wobei R₁₃ H, ein Metall oder eine Alkylgruppe bedeutet.

9. Verfahren gemäß einem der Ansprüche 1 oder 2, bei dem das Monomer ein cyclisches Amin umfasst, das wenigstens zwei Stickstoffatome aufweist.

10. Verfahren gemäß Anspruch 9, bei dem das Monomer der folgenden Formel (IV) entspricht: 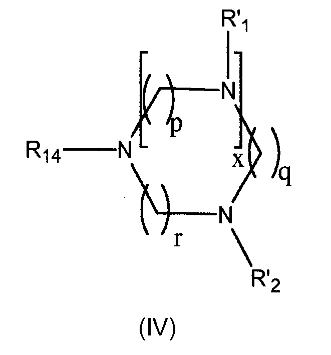 worin
- R₁₄ eine aus den Gruppen der folgenden Formeln ausgewählte Gruppe bedeutet: 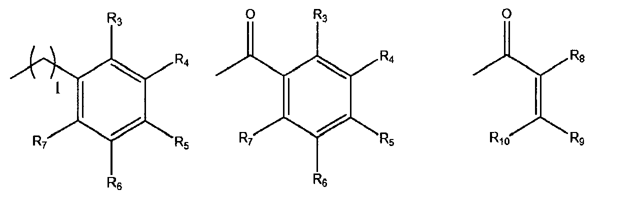 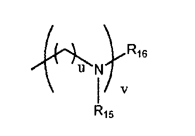
- R'₁ und R'₂ unabhängig eine Alkylgruppe, eine Arylgruppe oder eine Gruppe der folgenden Formeln bedeuten: 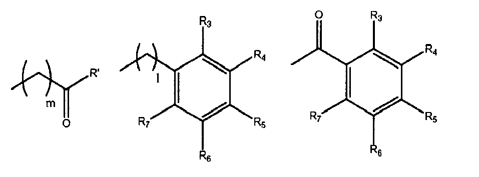 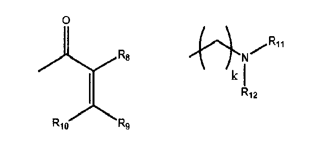 wobei R₁₁ und R₁₂ unabhängig Gruppen entsprechen, die dieselbe Definition wie die vorstehend angegebenen Gruppen R'₁ und R'₂ aufweisen;
- R' eine Gruppe OR₁₃ oder ein Amin ist;
- R₃, R₄, R₅, R₆ und R₇ unabhängig H, eine ethylenische Gruppe, eine Alkylgruppe, eine Arylgruppe, eine Gruppe -O-Aryl, eine Gruppe -O-Alkyl, eine Acylgruppe, eine Alkylarylgruppe oder ein Halogenatom bedeuten, wobei die Alkyl-, Aryl-, Alkylaryl-, -O-Aryl- und -O-Alkylgruppen gegebenenfalls perfluoriert sind und durch ein oder mehrere Sauerstoff-, Stickstoff-, Schwefel- und/oder Selenatome in diesen Gruppen unterbrochen sein können, mit der Maßgabe, dass wenigstens eines von R₃, R₄, R₅, R₆ und R₇ eine ethylenische Gruppe bedeutet;
- R₈, R₉ und R₁₀ unabhängig H, eine ethylenische Gruppe, eine Alkylgruppe, eine Arylgruppe, eine Gruppe -O-Aryl, eine Gruppe -O-Alkyl, eine Acylgruppe, eine Alkylarylgruppe oder ein Halogenatom bedeuten, wobei die Alkyl-, Aryl-, Alkylaryl-, -O-Aryl- und -O-Alkylgruppen gegebenenfalls perfluoriert sind und durch ein oder mehrere Sauerstoff-, Stickstoff-, Schwefel- und/oder Selenatome in diesen Gruppen unterbrochen sein können;
- R₁₅ eine Gruppe der folgenden Formeln bedeutet: 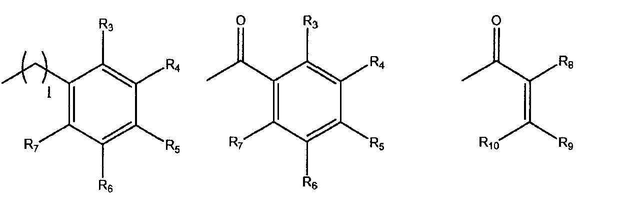
wobei R₃ bis R₁₀ wie vorstehend definiert sind;
- R₁₃ H, ein Metall, eine Alkylgruppe, eine Arylgruppe, eine Acylgruppe oder eine Alkylarylgruppe bedeutet, wobei die Alkyl-, Aryl- und Alkylarylgruppen gegebenenfalls perfluoriert sind und durch ein oder mehrere Sauerstoff-, Schwefel- und/oder Selenatome in diesen Gruppen unterbrochen sein können;
- R₁₆ eine Gruppe der Formel 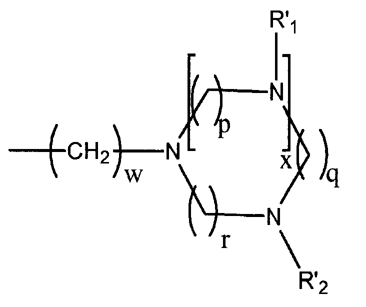 bedeutet, wobei R'₁ und R'₂ wie vorstehend definiert sind; und
- k, l, m, u, p, q, r, x und w ganze Zahlen von 0 bis 20 sind und v eine ganze Zahl von 1 bis 20 ist, mit der Maßgabe, dass wenn x 0 ist, (r + q) wenigstens 2 ist und wenn x 1 ist, wenigstens eines von p, q und r von 0 verschieden ist.

11. Verfahren gemäß Anspruch 10, bei dem R₁₄ eine Gruppe der folgenden Formel bedeutet: 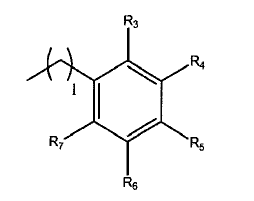 und wenigstens eines von R'₁ und R'₂ 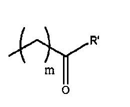 bedeutet, wobei R₃ bis R₇, R', l und m dieselbe Bedeutung wie die in Anspruch 10 angeführte aufweisen und p, q, r und x wenigstens 1 sind.

12. Verfahren gemäß Anspruch 10 oder 11, bei dem R₁₄ eine Gruppe der Formel 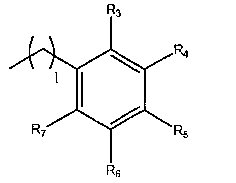 ist, wobei R'₁ und R'₂ eine Gruppe der Formel 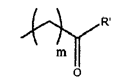 bedeuten und R₃ bis R₇, R', l und m dieselbe Bedeutung wie die in Anspruch 10 angeführte aufweisen und p, q, r und x wenigstens 1 sind.

13. Verfahren gemäß einem der Ansprüche 10 bis 12, bei dem das Monomer der folgenden Formel (V) entspricht: 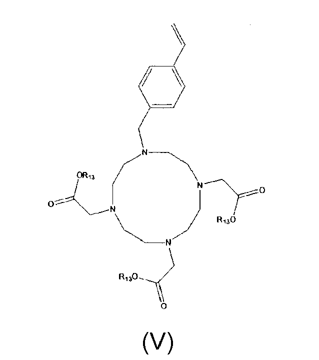 wobei R₁₃ H, ein Metall oder eine Alkylgruppe bedeutet.

14. Verfahren gemäß Anspruch 10, bei dem R₁₄ eine Gruppe der Formel 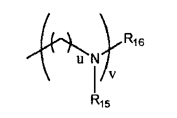 bedeutet und wenigstens eines von R'₁ und R'₂ 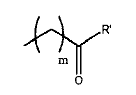 bedeutet, wobei R₁₅, R₁₆, R', m, u und v dieselben Bedeutungen wie die in Anspruch 10 angeführten aufweisen und p, q, r und x wenigstens 1 sind.

15. Verfahren gemäß einem der vorangehenden Ansprüche, bei dem das Metallelement aus Alkalimetallen, Erdalkalimetallen, Übergangsmetallen, Lanthaniden, Actiniden sowie den Elementen Al, Ga, Ge, In, Sn, Sb, TI, Pb, Bi oder Po ausgewählt ist.

16. Verfahren gemäß Anspruch 15, bei dem das Metallelement ein Lanthanidenelement wie etwa Ytterbium ist.

17. Verfahren gemäß einem der vorangehenden Ansprüche, bei dem der Polymerisationsschritt in Gegenwart eines oder mehrerer, von dem gemäß einem der Ansprüche 1 bis 14 definierten Monomer verschiedener Comonomeren durchgeführt wird.

18. Verfahren gemäß Anspruch 17, bei dem das oder die Comonomeren aus Styrolmonomeren und Acrylatmonomeren ausgewählt sind.

19. Verfahren gemäß Anspruch 17 oder 18, bei dem das oder die Comonomeren wenigstens zwei ethylenische Gruppen umfassen.

20. Verfahren gemäß Anspruch 18 oder 19, bei dem das oder die Comonomeren einer der folgenden Formeln (VII) oder (VIII) entsprechen: 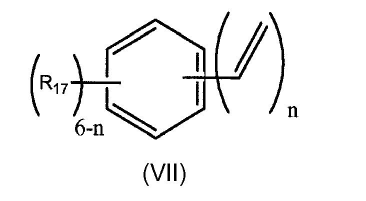 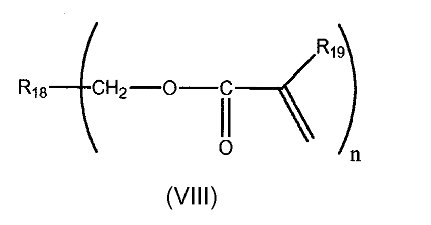 bei denen die (6-n) R₁₇ gleich oder verschieden sind und ein Wasserstoffatom, eine Alkylgruppe, eine Arylgruppe, eine Gruppe -O-Aryl, eine Gruppe -O-Alkyl, eine Acylgruppe, eine Alkylarylgruppe oder ein Halogenatom bedeuten, wobei die Alkyl-, Aryl-, Alkylaryl-, -O-Aryl- und -O-Alkylgruppen gegebenenfalls perfluoriert sind, R₁₈ eine Alkylgruppe bedeutet, R₁₉ H oder eine Alkylgruppe bedeutet und n eine ganze Zahl von 1 bis 3 ist.

21. Verfahren gemäß Anspruch 20, bei dem das Comonomer Divinylbenzol ist.

22. Verfahren gemäß Anspruch 1, bei dem Schritt a) in Gegenwart eines Monomeren der folgenden Formel (III): 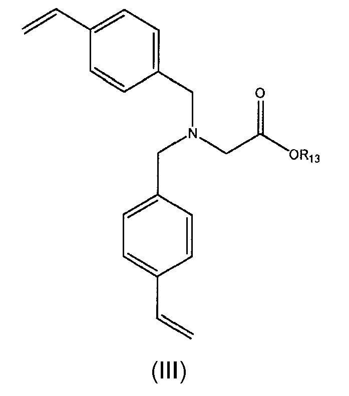 wobei R₁₃ H, ein Metall oder eine Alkylgruppe bedeutet, oder von Divinylbenzol oder Styrol stattfindet.

## Claims

1. A method for elaborating polymeric balls doped with at least one metal element, comprising the following steps:
a) a step for forming polymeric balls by polymerization, in an organic phase comprising a polymerization initiator, of at least one ethylenic monomer comprising at least one chelating ligand of at least one metal element;
b) a step for putting said polymeric balls in contact with a solution comprising at least one metal element,
wherein step a) is applied by the succession of the following operations:
*formation of liquid balls by encapsulation of a first aqueous phase W₁ in an organic phase, this organic phase comprising at least one ethylenic monomer comprising at least one chelating ligand of at least one metal element and at least one polymerization initiator;
*emulsifying in a second aqueous phase W₂ the thereby formed balls;
*polymerization of monomer(s) making up the organic phase, by means of which polymeric balls are obtained.

2. An elaboration method according to claim 1, wherein the ethylenic monomer comprising at least one chelating ligand of at least one metal element is a monomer including at least one group bearing a free doublet and/or at least one negatively charged group.

3. The elaboration method according to claim 1 or 2, wherein the ethylenic monomer comprising at least one chelating ligand of at least one metal element is a monomer fitting the following formula (I): 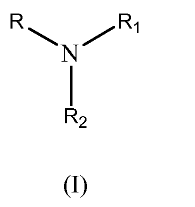 wherein:
- R represents a group selected from the groups of the following formulae: 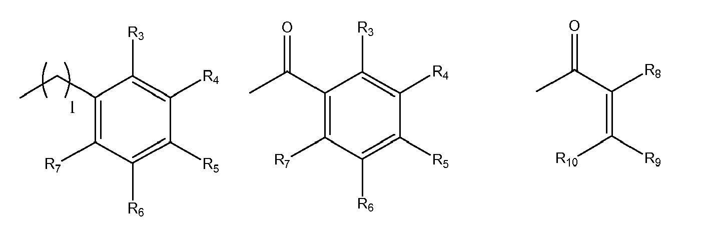
- R₁ and R₂ represent independently H, an alkyl group, an aryl group or a group of the following formula: 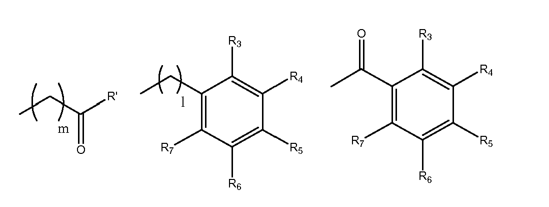 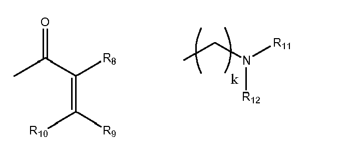 R₁₁ and R₁₂ corresponding, independently, to groups fitting the same definition as R₁ and R₂ given above;
- R' is an OR₁₃ or amine group;
- R₃, R₄, R₅, R₆, R₇, represent independently, H, an ethylenic group, an alkyl group, an aryl group, an -O-aryl group, an -O-alkyl group, an acyl group, an alkylaryl group or a halogen atom, said alkyl, aryl, alkylaryl, -O-aryl, -O-alkyl groups being optionally perfluorinated, wherein one or more oxygen, nitrogen, sulfur and/or selenium atoms may be inserted into said groups, provided that at least one of R₃, R₄, R₅, R₆, R₇ represents an ethylenic group;
- R₈, R₉ and R₁₀ represent, independently, H, an ethylenic group, an alkyl group, an aryl group, an O-aryl group, an O-alkyl group, an acyl group, an alkylaryl group or a halogen atom, said alkyl, aryl, alkylaryl, -O-aryl, -O-alkyl groups being optionally perfluorinated, wherein one or more oxygen, nitrogen, sulfur and/or selenium atoms may be inserted into said groups;
- R₁₃ represents H, a metal, an alkyl group, an aryl group, an acyl group or an alkylaryl group, said alkyl, aryl, alkylaryl groups being optionally perfluorinated and wherein one or more oxygen, sulfur and/or selenium atoms may be inserted into said groups;
- k, 1 and m are integers ranging from 0 to 20;
and salts thereof.

4. The method according to claim 3, wherein R is a group of formula: 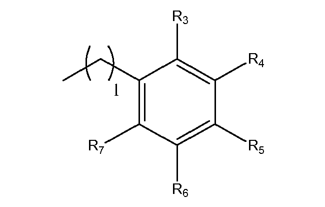 and at least one of R¹ and R² is a group of formula: 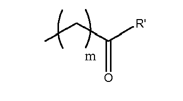 R₃ to R₇, R', 1 and m having the same meanings as those stated in claim 3.

5. The method according to claim 3 or 4, wherein R is a group of formula: 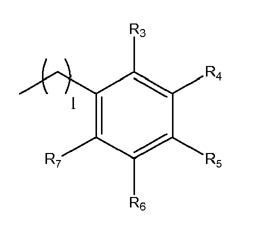 R₁ is a group of formula: 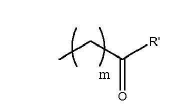 and R₂ is a hydrogen atom, R₃ to R₇, R', 1 and m having the same meanings as those stated in claim 3.

6. The method according to claim 5, wherein the monomer fits the following formula (II): 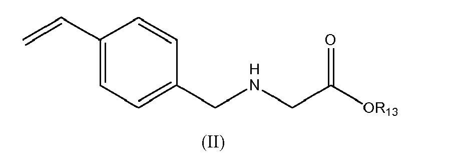 R₁₃ representing H, a metal or an alkyl group.

7. The method according to claim 4 or 5, wherein R is a group of formula: 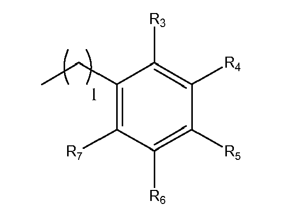 R₁ is a group of formula: 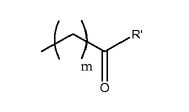 and R₂ is a group of formula: 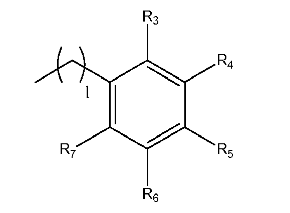 1 and m, R₃ to R₇ and R' having the same meanings as those given in claim 3.

8. The method according to claim 7, wherein the monomer fits the following formula (III): 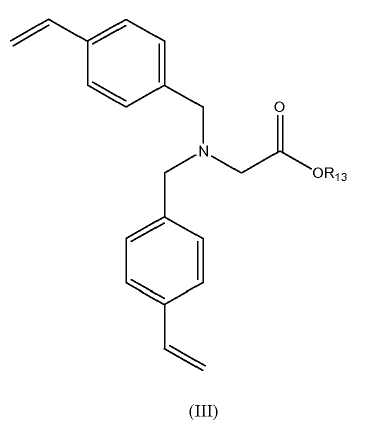 R₁₃ representing H, a metal or an alkyl group.

9. The method according to any of claims 1 or 2, wherein the monomer comprises a cyclic amine comprising at least two nitrogen atoms.

10. The method according to claim 9, wherein the monomer fits the following formula (IV): 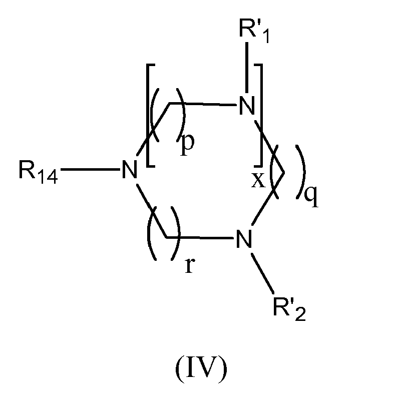 wherein:
- R₁₄ represents a group selected from the groups of the following formulae: 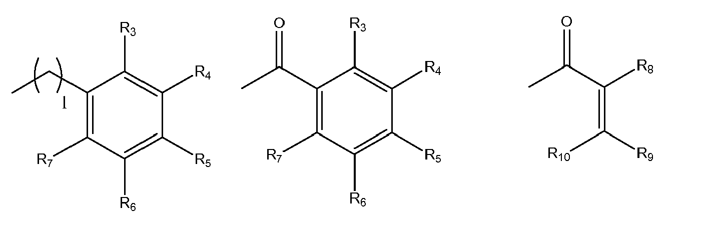 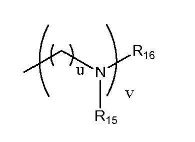
- R'₁ and R'₂ represent, independently, an alkyl group, an aryl group or a group of the following formulae: 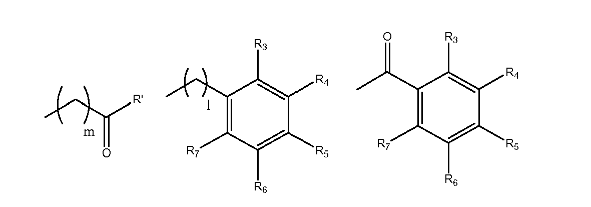 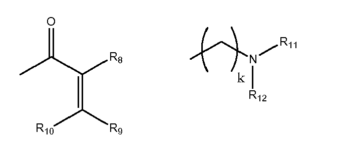 R₁₁ and R₁₂ corresponding, independently, to groups fitting the same definition as for R'₁ and R'₂ given above;
- R' is an OR₁₃ or amine group;
- R₃, R₄, R₅, R₆ and R₇ represent, independently, H, an ethylenic group, an alkyl group, an aryl group, an -O-aryl group, an -O-alkyl group, an acyl group, an alkylaryl group or a halogen atom, said alkyl, aryl, alkylaryl, -O-aryl, -O-alkyl groups being optionally perfluorinated, wherein one or more oxygen, nitrogen, sulfur and/or selenium atoms may be inserted into said groups, provided that at least one of the R₃, R₄, R₅, R₆, R₇ represents an ethylenic group;
- R₈, R₉ and R₁₀ represent independently H, an ethylenic group, an alkyl group, an aryl group, an -O-aryl group, an -O-alkyl group, an acyl group, an alkylaryl group or a halogen atom, said alkyl, aryl, alkylaryl, -O-aryl, -O-alkyl groups being optionally perfluorinated, wherein one or more oxygen, nitrogen, sulfur and/or selenium atoms may be inserted into said groups;
- R₁₅ represents a group of the following formulae: 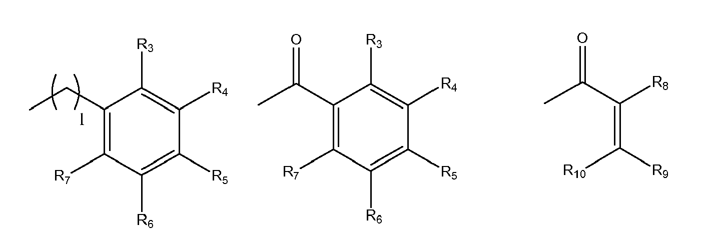 R₃ to R₁₀ being as defined above;
- R₁₃ represents H, a metal, an alkyl group, an aryl group, an acyl group or an alkylaryl group, said alkyl, aryl, alkylaryl groups being optionally perfluorinated and wherein one or more oxygen, sulfur and/or selenium atoms may be inserted into said groups;
- R₁₆ represents a group of formula: 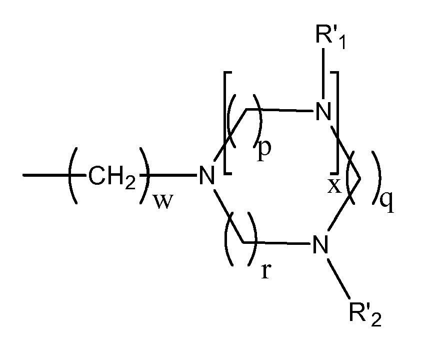 R'₁ and R'₂ being as defined above;
- k, l, m, u, p, q, r, x and w are integers ranging from 0 to 20, v is an integer ranging from 1 to 20, provided that, when x is equal to 0, (r+q) is at least equal to 2, and when x is equal to 1, at least one of p, q, r is different from 0.

11. The method according to claim 10, wherein R₁₄ represents a group of the following formula: 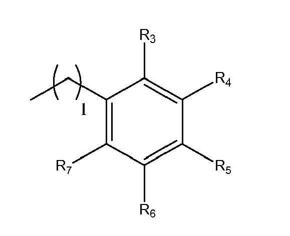 and at least one of R'₁ and R'₂ represents: 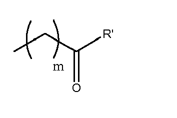 R₃ to R₇, R', 1 and m fitting the same definition as the one given in claim 10, p, q, r and x being at least equal to 1.

12. The method according to claim 10 or 11, wherein R₁₄ is a group of formula: 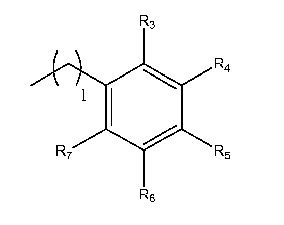 R'₁ and R'₂ represent a group of formula: 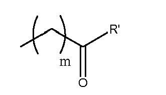 R₃ to R₇, R', l and m fitting the same definition as the one given in claim 10, p, q, r and x being at least equal to 1.

13. The method according to any of claims 10 to 12, wherein the monomer fits the following formula (V): 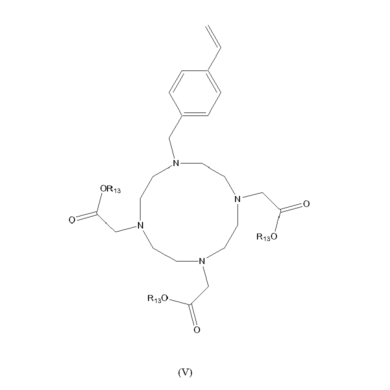 R₁₃ representing H, a metal or an alkyl group.

14. The method according to claim 10, wherein R₁₄ represents a group of formula: 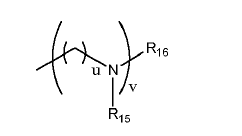 and at least one of R'₁ and R'₂ represents: 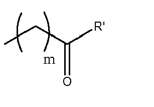 R₁₅, R₁₆, R', m, u and v fitting the same definitions as those given in claim 10, p, q, r and x being at least equal to 1.

15. The method according to any of the preceding claims, wherein the metal element is selected from alkaline metals, earth alkaline metals, transition metals, lanthanides, actinides as well as the elements Al, Ga, Ge, In, Sn, Sb, Tl, Pb, Bi or Po.

16. The method according to claim 15, wherein the metal element is a lanthanide element, such as ytterbium.

17. The method according to any of the preceding claims, wherein the polymerization step is carried out in the presence of one or several comonomers different from the monomer defined according to any of claims 1 to 14.

18. The method according to claim 17, wherein the comonomer(s) is(are) selected from styrenic monomers and acrylate monomers.

19. The method according to claim 17 or 18, wherein the comonomer(s) comprise(s) at least two ethylenic groups.

20. The method according to claim 18 or 19, wherein the comonomer(s) fit(s) one of the following formulae (VII) or (VIII): 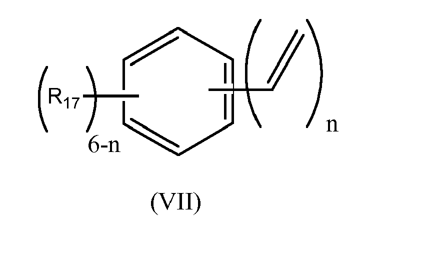 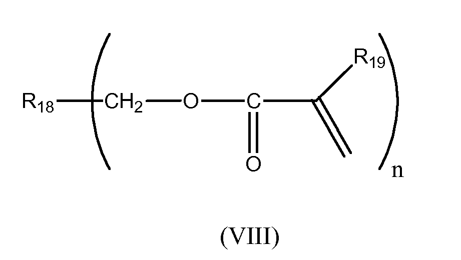 wherein the (6-n) R₁₇, either identical or different, represent a hydrogen atom, an alkyl group, an aryl group, an -O-aryl group, an -O-alkyl group, an acyl group, an alkylaryl group or a halogen atom, said alkyl, aryl, alkylaryl, -O-aryl, -O-alkyl groups being optionally perfluorinated, R₁₈ represents an alkyl group, R₁₉ represents H or an alkyl group and n being an integer ranging from 1 to 3.

21. The method according to claim 20, wherein the comonomer is divinylbenzene.

22. The method according to claim 1, wherein step a) takes place in the presence of a monomer of the following formula (III): 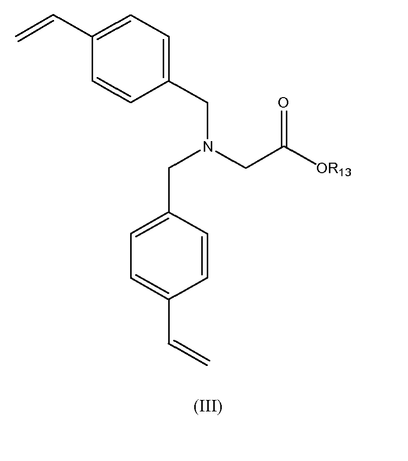 R₁₃ representing H, a metal or an alkyl group and divinylbenzene and styrene.
